Europäisches Patentamt

European Patent Office

Office européen des brevets

(11) Publication number : **0 493 123 A1**

# (12) EUROPEAN PATENT APPLICATION

(21) Application number : **91312041.6**

(22) Date of filing : **24.12.91**

(51) Int. Cl.$^5$ : **B32B 15/08**, B32B 15/18

(30) Priority : **28.12.90 JP 409450/90**

(43) Date of publication of application :
**01.07.92 Bulletin 92/27**

(84) Designated Contracting States :
**DE FR GB IT SE**

(71) Applicant : **KAWASAKI STEEL CORPORATION**
**1-28, Kitahonmachi-dori 1-Chome**
**Chuo-Ku, Kobe-Shi Hyogo-Ken (JP)**

(72) Inventor : **Eguchi, Kunihio, c/o Technical Res.**
**Division**
**Kawasaki Steel Corporation , 1, Kawasaki-cho**
**Chiba-shi, Chiba (JP)**

Inventor : **Uchida, Yasunobu, c/o Technical**
**Res. Division**
**Kawasaki Steel Corporation , 1, Kawasaki-cho**
**Chiba-shi, Chiba (JP)**
Inventor : **Sakamoto, Seiji, c/o Technical Res.**
**Division**
**Kawasaki Steel Corporation , 1, Kawasaki-cho**
**Chiba-shi, Chiba (JP)**
Inventor : **Ono, Tomoshige, c/o Technical Res.**
**Division**
**Kawasaki Steel Corporation , 1, Kawasaki-cho**
**Chiba-shi, Chiba (JP)**
Inventor : **Suginobe, Hidetaka, c/o Technical**
**Res. Division**
**Kawasaki Steel Corporation , 1, Kawasaki-cho**
**Chiba-shi, Chiba (JP)**

(74) Representative : **Overbury, Richard Douglas et**
**al**
**Haseltine Lake & Co Hazlitt House 28,**
**Southampton Buildings Chancery Lane**
**London WC2A 1AT (GB)**

(54) **Composite vibration-damping material and process for producing the same.**

(57) The composite vibration-damping material exhibiting satisfactory damping performance over a broad range of temperatures has a resin layer interposed between two metal sheets, said resin layer containing as two main components a thermoplastic resin having crosslinkable functional groups and a crosslinking agent for said thermoplastic resin, said resin layer being composed of the layer of resin A having a relatively high glass transition point and the layer of resin B having a relatively low glass transition point, the layers of said resins A and B being bound together via the layer of resin C that is formed by the crosslinking of those two resin layers. This composite vibration-damping material may be produced by a process that comprises preparing solutions of yet to be crosslinked resin compositions (A) and (B), applying said solutions onto different metal sheets, removing the solvent, and bonding the coated surfaces of the two metal sheets together by heating while the degree of crosslinking reaction of each resin composition is within the range of 0 - 50%. Advantageously, the crosslinkable thermoplastic resin is a saturated polyester and the crosslinking agent is a polyisocyanate compound.

EP 0 493 123 A1

## BACKGROUND OF THE INVENTION

This invention relates to a composite vibration-damping material and a process for producing the same.

The composite vibration-damping material of the present invention exhibits good vibration-damping performance over a broad range of temperatures while insuring high bonding strength, as well as high thermoresisting adhesion. Because of these features, this material is applicable not only to stair-steps, doors and floors but also to an automobile's oil pan, as well as the dash panel, floor panel and roof panel around the body where it has been difficult to use conventional composite vibration-damping materials. The composite vibration-damping material of the present invention is also applicable to covers on motors and compressors. In short, this material finds potential use in a broad scope of applications including civil engineering, construction field, automotive industry and electric industry.

With the increasing concern over noise and vibrations as sources of environmental pollutions, considerable efforts are being made to solve these problems. In particular, various regulations have been enacted and implemented to control the noise from automobiles and other sources and active research efforts are being made to develop materials that are capable of effective noise control.

Under these circumstances, there has been a great need for materials capable of damping vibrations and composite vibration-damping materials having a viscoelastic core resin sandwiched between metal layers have drawn researcher's attention as effective materials for controlling noise and vibrations. The energy of vibration as applied to either metal sheet of the damping material is converted by the core resin to thermal energy and such composite vibration-damping materials are being used or reviewed for use in various applications including an automobile's oil pan, stair-steps, doors, building materials such as flooring and roofing, and covers on motors and compressors.

The damping performance of such composite vibration-damping materials generally depends upon the performance of the core resin layer. If their damping performance is represented by a loss factor ($\eta$), this parameter has a peak value at a certain temperature. It is therefore known that composite vibration-damping materials work in the most effective way if they are used at temperatures in the neighborhood of the temperature for the peak loss factor.

As is generally known, the temperature for the peak loss factor is in substantial agreement with either one of the following temperatures at which the modulus of the core resin drops, i.e., the glass transition point, softening point and the melting point. Among other things, the glass transition of the core resin contributes to a particularly great maximum value of $\eta$. Therefore, the temperature for the peak loss factor of the composite vibration-damping material is commonly controlled by changing the glass transition point of the core resin in that material.

Materials that have heretofore been reviewed for use as the core resin to be sandwiched between the composite vibration-damping metal sheets include: polyurethane [Japanese Patent Publication (kokai) No. 19277/1972], polyesters [Japanese Patent Publication (kokai) No. 143880/1975], polyamides [Japanese Patent Publication (kokai) No. 79146/1976], polyisobutylene [Japanese Patent Publication (kokai) No. 43251/1979], ethylene/$\alpha$-olefins [Japanese Patent Publication (kokai) No. 84655/1980], EVA [Japanese Patent Publication (kokai) No. 34949/1982], crosslinked polyolefins [Japanese Patent Publication (kokai) No. 152487/1984], and polyvinyl acetal [Japanese Patent Publication (kokai) No. 88149/1985]. It is also known that asphalt, synthetic rubbers, acrylic tackifiers, epoxy resins, etc. have the ability to damp vibrations.

Among the core resins listed above, those which are flexible at ordinary temperatures such as acrylic tackifiers, isobutylene rubber and EVA have fairly good damping performance at temperatures near ordinary temperatures; however, the cohesive force of those resins is so weak at ordinary temperatures that their adhesive strength is small and the composite vibration-damping materials using those resins are not only unable to withstand shaping processes but also devoid of head resistance and, hence, they have only found limited use in construction materials which are almost flat in shape. Compared to these flexible resins, polyolefin resins that are modified by copolymerization or blending, for example, ethylene/$\alpha$-olefin resins exhibit fairly good damping performance in the higher-temperature range of 50 - 100 °C and, in addition, the cohesive force of those resins is strong at ordinary temperatures and they are adaptive to shaping processes. Therefore, the composite damping materials using those resins are said to be suitable for use in applications such as in an automobile's oil pan where high operating temperatures are normal.

However, neither class of core resins, even if their use is limited, have yet attained a satisfactory level in terms of vibration damping and bonding performance. Further, nobody has yet discovered a resin that is suitable for composite vibration-damping materials that exhibit high vibration-damping performance at widely varying temperatures ranging from ordinary to elevated temperatures (as encountered with parts around the automotive body) and that are required to have sufficiently high bonding performance to withstand shapin processes, as well as high thermoresistant bonding property at elevated temperatures.

Examples of the review on the vibration-damping performance over a broad range of temperatures are described in Japanese Patent Publication (kokai) Nos. 82349/1985, 89841/1986, 217237/1986, 152751/1987, 56446/1988, 278845/1988, etc., which disclose methods that involve the use of a core resin in a multi-layered film. The composite materials proposed by those patents exhibit satisfactory vibration-damping performance over a fairly broad range of temperature but they all contain a thermoplastic resin in the multi-layered film and have suffered from the problem of low thermoresistant bonding property. Further, because of their multi-layered structure, those damping materials experience dislocation in that portion of the resin layer which has the weakest cohesive force under tensile shear, thereby making it impossible to satisfy the requirement for high bonding performance.

Examples of a similar review are described in Japanese Patent Publication (kokai) Nos. 258262/1985, 28551/1986, 28553/1986, etc., which disclose methods that use as the core resin a vibration-damping resin composition made of immiscible resins. The composite materials proposed by those patents also exhibit satisfactory vibration-damping performance over a fairly broad range of temperatures but, as in the aforementioned case, the materials all contain a thermoplastic resin and, hence, have suffered from problems in association with the heat resistance of adhesion and bonding performance. Further, it has been found that if the constituent resins are immiscible with one another, the cohesive force at the interface between the respective resins that constitute the resin composition decreases to cause deterioration in its bonding performance.

## SUMMARY OF THE INVENTION

The present invention has been accomplished under these circumstances and has as an object providing a composite vibration-damping material that exhibits excellent damping performance at temperatures ranging from ordinary to elevated temperatures, specifically from 20 to 100°C, that has sufficiently strong bonding performance to withstand subsequent shaping processes, and that insures high heat stability at elevated temperatures, specifically at 100°C and above. As a result of the extensive studies conducted to attain the above-stated object, the present inventors found that in order to enhance the cohesive force of the core resin while exhibiting strong bonding performance and high heat stability, it was effective to use in the composite vibration-damping material that core resin which had a crosslinking agent incorporated in a crosslinkable thermoplastic resin and that was capable of forming a crosslinked structure. The present inventors also found that in order to insure that excellent damping performance would be exhibited over a broad range of temperatures, it was effective to composite two or more crosslinked resins having either different glass transition points or different crosslink densities (degrees of crosslinking). Further, the present inventors found that by insuring that the composite structure of the two or more crosslinked resins would provide a separation-free multi-layered structure (i.e., having crosslinks formed between adjacent layers of crosslinked resins), a composite vibration-damping material that would satisfy all three requirements of interest, i.e., a broad temperature range for vibration damping, a sufficiently high cohesive force of resins to guarantee strong bonding performance, and high heat resistance, could be obtained. One aspect of the present invention has been accomplished on the basis of those findings. The present inventors also conducted intensive studies in order to develop a process for producing the improved composite vibration-damping material and found that it could be obtained by a process comprising preparing solutions of two crosslinkable thermoplastic resins that incorporate a crosslinking agent and that have different glass transition points, applying those resin solutions on two respective metal sheets, removing the solvent, and bonding the coated surfaces of the two metal sheets together by heating before the crosslinking reaction is completed. Another aspect of the present invention has been accomplished on the basis of this finding.

The present inventors also found that a spot-weldable composite vibration-damping material could be obtained by incorporating an electrically conductive material in the resin composition forming the core resin of the damping material. It was also found that such a spot-weldable composite vibration-damping material could be produced either by a method of mixing an electrically conductive material with a solution of the thermoplastic resin and the crosslinking agent or by a method comprising applying said solution onto a metal sheet and then spraying the coated surface with an electrically conductive material. Yet another aspect of the present invention has been accomplished on the basis of this finding.

According to its first aspect, the present invention provides a composite vibration-damping material that has a resin layer interposed between two metal sheets, said thermoplastic resin having two or more crosslinkable functional groups in the molecule and being crosslinked with a crosslinking agent that forms crosslinks with said crosslinkable functional groups, which resin layer is characterized by comprising either the following a) or b) or both:

a) a layer of resin A and a layer of resin B that have different glass transition points;
b) a layer of resin A and a layer of resin B that have different crosslink densities,

the layers of resins A and B being bound together by means of crosslinking.

In an embodiment, the layers of resins A and B are bound together via a layer of resin C that is formed by the crosslinking of the layers of resins A and B, and said layer of resin C has no discontinuous profile of glass transition point or crosslink density in the direction of its thickness.

In another embodiment, said thermoplastic resin is a saturated polyester or said crosslinking agent is a polyisocyanate compound.

In yet another embodiment, the resin interposed between the two metal sheets further contains an electrically conductive material.

According to its second aspect, the present invention provides a process for producing a composite vibration-damping material that comprises: preparing a solution of a yet to be crosslinked resin composition (A) that will form a layer of resin A upon crosslinking, as well as a solution of a yet to be crosslinked resin composition (B) that will form a layer of resin B upon crosslinking; applying said solutions onto different metal sheets; removing the solvent; and bonding the coated surfaces of the two metal sheets together by heating while the degree of crosslinking reaction of each resin composition is within the range of 0 - 50% (with the degree of saturated crosslinking reaction being taken as 100%).

## BRIEF DESCRIPTION OF THE DRAWINGS

Fig. 1 is a diagram showing schematically the concept of the composite vibration-damping material of the present invention;

Fig. 2 is a graph showing the temperature-dependency of the vibration damping property of composite damping materials having core resins with different crosslink densities; and

Fig. 3 is a graph showing the temperature-dependency of the vibration damping property of composite damping materials having core resins with different glass transition points.

## DETAILED DESCRIPTION OF THE INVENTION

The present invention is described below in greater detail.

The composite vibration-damping material of the present invention has a basic structure in which a resin layer is provided between two metal sheets. The composite vibration-damping material of the present invention is characterized in that said resin layer has a separation-free multi-layered structure, in which structure resins having different characteristics are provided in layers but the respective layers are chemically bound together by crosslinking to form a structurally single layer. Stated more specifically, the respective resin layers satisfy either the following requirement a) or b) or both:

a) a resin composition (A) and a resin composition (B) that have different glass transition points should be crosslinked to form a layer of resin A and a layer of resin B, respectively;

b) a resin composition (A) and a resin composition (B) that have different crosslink densities should be crosslinked to form a layer or resin A and a layer of resin B, respectively.

Optionally, a layer of resin C that is formed by the crosslinking between the resin compositions (A) and (B) may be present between the layers of resins A and B, whereby crosslinks are formed between adjacent resin layers.

The damping performance of the composite vibration-damping material that has the core resin provided between metal sheets is governed by the characteristics of the core resin. If the core resin is flexible (as in the case where it has a low glass transition point or a small crosslink density), the damping property at near-ordinary temperatures is fairly good but on account of the low cohesive force of the resin, the strength of adhesion to the metal sheets is low at more-than-ordinary temperatures and, in addition, the heat resistance is also low. If, on the other hand, the core resin is hard (as in the case where it has a high glass transition point or a high crosslink density), the damping property on the higher-temperature side is fairly good and the cohesive force of the resin is strong at ordinary temperatures, with reasonable adaptability for shaping processes; however, the damping performance of the composite material is poor, particularly at near-ordinary temperatures.

Under the circumstances, various vibration-damping materials having either a multiple of core resin layers or a core layer made of a plurality of immiscible resins have been proposed with a view to attaining the desired characteristic of exhibiting effective vibration damping both at ordinary temperatures and at elevated temperatures. However, as already mentioned, the multi-layered resins proposed so far have problems to be solved in connection with the bonding performance and mechanical characteristics since the inter-layer portion which has the weakest cohesive force under shear or peel will be dislocated or because cracking or fracture will start at the interface between adjacent resin layers.

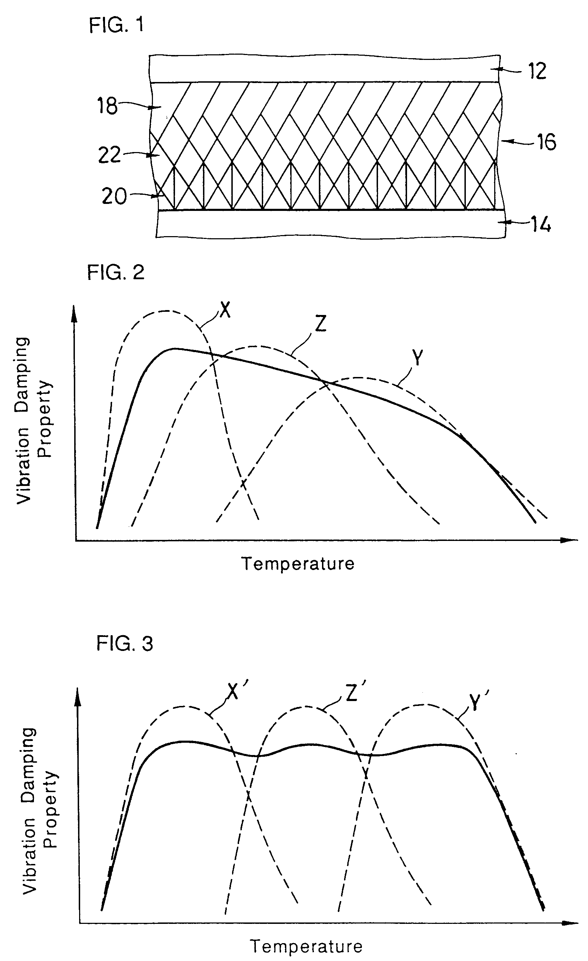

Compared to those prior art versions, the core resin in the vibration-damping material of the present invention is also composed of two or more layers of resins having different characteristics but there is no boundary between adjacent resin layers. In other words, the characteristics of the resins vary continuously to achieve chemical bonding across the thickness of the core resin. Stated more specifically, as shown conceptually in Fig. 1, two metal sheets 12 and 14 have a core resin layer 16 provided therebetween and the following three layers are present within that core resin layer: a layer 18 of resin A having a comparatively low crosslink density, a layer 20 of resin B having a comparatively high crosslink density, and a layer 22 of resin C that is formed by the crosslinking between the resin layers 18 and 20, with crosslinks being formed between adjacent resin layers (lines within the core resin layer 16 in Fig. 1 show its molecular skeleton schematically).

If the flexible resin having a low crosslink density is solely used as the core resin, the resulting composite vibration-damping material displays "sharp" damping performance near at ordinary temperatures (low temperatures) as indicated by dashed line x in the graph of Fig. 2. On the other hand, if the resin having a high crosslink density is solely used as the core resin, the resulting composite vibration-damping material displays "broad" damping performance near at high temperatures as indicated by dashed line y in Fig. 2. Further, if a miscible resin blend that is obtained by blending the resin of low crosslink density with the resin of high crosslink density is solely used as the core resin, the resulting composite vibration-damping material displays damping performance (as indicated by dashed line z) that is intermediate between dashed lines x and y in Fig. 2.

It should be noted here that the core resin in the damping material of the present invention is not the laminate of three resin layers A, B and C formed individually but the product of crosslinking of the three resin layers. Therefore, the damping performance at near-ordinary temperatures is exhibited by the layer 18 of flexible resin A having low crosslink density and the damping performance at high temperatures is exhibited by the layer 20 of resin B having high crosslink density, whereas the damping performance at intermediate temperatures is exhibited by the layer 22 of resin C, making it possible to achieve high damping performance over a broad range of temperatures as indicated by a solid line in Fig. 2.

The same results are obtained even if the "crosslink density" of resin layers which is discussed above is replaced by the "glass transition point". Namely, if a resin having a low glass transition point is solely used as the core resin, the resulting composite vibration-damping material displays high damping performance near at ordinary temperatures (low temperatures) as indicated by dashed line x′ in the graph of Fig. 3. On the other hand, if a resin having a high glass transition point is solely used as the core resin, the resulting composite vibration-damping material displays high damping performance at high temperatures as indicated by dashed line y′ in Fig. 3. Further, if a miscible resin blend that is obtained by blending the resin of low glass transition point with the resin of high glass transition point is solely used as the core resin, the resulting composite vibration-damping material displays damping performance (as indicated by dashed line z′) that is intermediate between dashed lines x′ and y′ in Fig. 3.

It should also be noted here that the core resin in the damping material of the present invention is composed of the aforementioned three resin layers as they have been crosslinked with one another. Therefore, the damping performance at ordinary temperatures is exhibited by the layer of resin A of low glass transition point which displays good elasticity at ordinary temperatures and the damping performance at high temperatures is exhibited by the layer of resin B of high glass transition point which displays good elasticity at high temperatures, whereas the damping performance at intermediate temperatures is exhibited by the layer of resin C which has been obtained by the crosslinking of the layers of resins A and B, thus making it possible to achieve high damping performance over a broad range of temperatures as indicated by a solid line in Fig. 3.

It is also possible for the core resin to be comprised of resin layers having different glass transition points so as to satisfy requirement a), as well as resin layers having different crosslink densities so as to satisfy requirement b).

According to the present invention, high vibration-damping performance can be achieved over a broad range of temperatures as described above and, at the same time, strong adhesion to metals or between resin layers, the requirement that has heretofore been incompatible with the condition for high damping performance, can be satisfied.

The core resin layer is the combination in layers of three resins having different characteristics; however, since crosslinking is accomplished between adjacent resin layers, the combined layers form structually a single layer. Hence, no stress concentration will take place in the soft resin layer under the application of an external force such as shear or peeling force and, accordingly, the composite vibration-damping material of the present invention is excellent in moldability and adaptability for shaping processes, as well as in mechanical characteristics.

The essential constituents for obtaining the composite vibration-damping material of the present invention are next described below.

The first essential constituent is thermoplastic resin having two or more crosslinkable functional groups in the molecule. The term "crosslinkable functional group" as used herein means a group that reacts with the crosslinking agent to be described hereinafter and it may be specifically exemplified by hydroxyl group, an epoxy group, an amino group, carboxyl group, isocyanate group, an acid anhydride group, etc. Therefore, examples of the thermoplastic resin that can be used in the present invention include thermoplastic polyester resins having said hydroxyl and carboxyl groups, glycidyl etherized polyol epoxy resins having said epoxy group, functionality containing diene resins having a double bond portion in the molecule, polyamide resins having said amino and carboxyl groups and an acid amido bond; and modified polyolefin resins having said acid anhydride and carboxyl groups.

Stated more specifically, thermoplastic polyester resins may be exemplified by those materials which are called "engineering plastics" such as polyethylene terephthalate, polybutylene terephthalate, polyallylate and thermotropic liquid-crystal polyesters that have a hydroxyl group or a carboxyl group at the end of the molecule.

Other examples include: polyester resins having a glass transition point of not nigher than 100°C that are synthesized both from at least one member of the group consisting of aromatic dibasic acids (e.g. dimethylterephthalic acid, terephthalic acid, isophthalic acid and phthalic acid) and aliphatic dibasic acids (e.g. succinic acid, glutaric acid, adipic acid, β-methyladipic acid, pimelic acid, 1,6-hexanedicarboxylic acid, azelaic acid, sebacic acid, nonanedicarboxylic acid, decanedicarboxylic acid and hexadecanedicarboxylic acid, and from at least one member of the group consisting of glycols (e.g. ethylene glycol, 1,2-propanediol, 1,3-propanediol, 1,3-butanediol, 1,4-butanediol, 1,2-pentanediol, 1,5-pentanediol, 3-methylpentanediol, 1,3-hexanediol, 1,6-hexanediol, neopentyl glycol, 1,4-cyclohexane diol, hydrogenated bisphenol A diethylene glycol, triethylene glycol, polyethylene glycol, dipropylene glycol, polypropylene glycol and polytetramethylene glycol) and residue forming derivatives thereof; polyester resins that are synthesized from caprolactone and that have a glass transition point of not higher than 100°C; as well as polyester resins that are synthesized from unsaturated aliphatic acids (e.g. maleic acid, fumaric acid and dimer acid) or polyfunctional (>2) aliphatic acids such as trimellitic acid and from polyfunctional (>2) hydroxy containing compounds such as trimethylolpropane and petaerythritol, and that have a glass transition point of not higher than 100°C.

The polyester resin, more specifically the copolymerized saturated polyester, that can be used in the present invention is described below in greater detail.

Among the polyesters that are to be used in the present invention, the preferred one is such that the terephthalic acid residue accounts for 30 mol% - 90 mol% of the acid component. Copolymerized saturated polymers in which the terephthalic acid residue accounts for less than 30 mol% of the acid component lack cohesive force, leading to weak adhesive strength or making it difficult to develop strength immediately after bonding in superposition, whereby troubles may occur during processing. If the terephthalic acid residue accounts for more than 90 mol% of the acid component, there also is a possibility for deteriorated bonding property.

If the terephthalic acid residue is used as the acid component in an amount within the range specified above, the aforementioned aromatic or aliphatic dibasic acid may be used as the remainder of the acid component. Preferably, one or more aliphatic dibasic acids, especially adipic acid and sebacic acid, may be used.

Among the polyesters that are to be used in the present invention, the preferred one is such that the ethylene glycol residue accounts for 30 mol% - 80 mol% of the glycol component. Copolymerized saturated polyesters in which the ethylene glycol residue accounts for less than 30 mol% of the glycol component are poor in bonding property; if the ethylene glycol residue accounts for more than 80 mol% of the glycol component, there also is the problem of poor bonding property and, at the same time, it may not be possible to achieve satisfactory vibration-damping performance.

If the ethylene glycol residue is used as the glycol component in an amount within the range specified above, the aforementioned glycols may be used as the remainder of the glycol component. More preferred examples are hexanediol ($C_6$) containing glycols, as well as polyoxyalkylene glycols such as polyethylene glycol and polytetramethylene glycol.

Copolymers with unsaturated aliphatic acids such as maleic acid, fumaric acid and dimer acid can also be used as polyesters but such copolyesters may be poor in bonding property or adhesive durability or their vibration-damping performance may itself be low; therefore, such copolyesters are preferably used in amounts that will not be detrimental to the objects of the present invention.

The polyesters to be used in the present invention may be synthesized by common methods, as exemplified by a process that comprises the reaction of esterification between the aforementioned dibasic acid or polybasic acid and glycol, etc., and a subsequent ester exchange reaction with excess glycol being distilled off at high temperatures under vacuum, and a process that comprises depolymerizing a preliminarily synthesized polyethylene terephthalate or polybutylene terephthalate in the presence of a desired dibasic acid, etc. and excess glycol, etc., and a subsequent ester exchange reaction that is performed in the same manner as described above.

Stated more specifically, a dibasic acid and glycol as principal starting materials are heated at 150 - 220°C to perform an ester exchange reaction at ordinary pressure in the presence of a catalyst chiefly composed of a metal salt, to thereby form an oligoester and, subsequently, the oligoester is heated at 200 - 270°C either at ordinary pressure or under vacuum to distil off excess glycol, to thereby synthesize a polyester of a higher molecular weight.

In the sysnthesis of the polyester, glycol is preferably added in an amount 1.5 - 2.0 times as much as that in the desired polyester composition. In this case, the composition of the polyester to be produced can be adjusted by measuring the molar ratio of the monomer residues by $^1$H-NMR. The polymerization catalyst may be appropriately selected from among common catalysts that are made of metal salts such as tetra-n-butoxytitanium, zinc acetate, antimony trioxide and potassium titanium oxalate.

Other thermoplastic resins that can be used in the present invention are specifically illustrated below.

The glycidyl etherized polyol epoxy resin may be exemplified by diglycidyl ethers or the glycols illustrated hereinabove as one of the starting materials for polyester resins or polyglycols thereof, glycerol triglycidyl either, polyglycerol polyglycidyl ether, trimethylolpropane diglycidyl ether, and diglycidyl polyesters or polyglycidyl polyesters having the aforementioned polyester resins glycidylated at the molecular end.

Exemplary diene resins include: a butadiene homopolymer, an isoprene homopolymer, a butadiene-styrene copolymer, a butadiene-isoprene copolymer and butadiene-acrylonitrile copolymer that have a hydroxyl group, a carboxyl group, an amino group, etc. at the molecular end or in the molecule. Exemplary polyamide resins include: nylon 6, nylon 66, nylon 8, and polyamide resins synthesized from a lactam such as caprolactam or lauryl lactam and an aminocarboxylic acid such as aminoundecanoic acid or aminododecanoic acid; and polyamide resins synthesized from an organic diamine such as hexamethylenediamine or octamethylenediamine and an aromatic or aliphatic dibasic acid that are illustrated hereinabove as one of the starting materials for polyester resins. Exemplary modified polyolefin resins include: a maleic acid graft modified ethylenepropylene copolymer, a maleic acid graft modified ethylene-vinyl acetate copolymer, a maleic anhydride graft modified ethylene-ethyl acrylate copolymer, maleic anhydride graft modified polyethylene, maleic anhydride graft modified polypropylene and an enthylene-methacrylic acid copolymer.

The thermoplastic resins listed above may be used either on their own or as admixtures.

In the present invention, the aforementioned polyester resin, in particular, the copolymerized saturated polyester is preferably used as the thermoplastic resin containing two or more crosslinkable functional groups in the molecule because the parameters to be described below, such as the number average molecular weight, glass transition point and the number of crosslinkable functional groups can be easily adjusted and because the composite vibration-damping material to be finally obtained possesses the desired characteristics for practical applications such as high bounding performance, good vibration-damping performance and excellent heat stability.

The present invention is characterized by using as the core resin a thermoplastic resin that has two or more crosslinkable functional groups in the molecule and that is crosslinked with a crosslinking agent capable of forming crosslinks with those crosslinkable functional groups. The core resin layer satisfies either the following requirement a) or b) or both:

a) that it should comprise a layer of resin A and a layer of resin B that have different glass transition points;

b) that it should comprise a layer of resin A and a layer of resin B that have different crosslink densities.

In a certain case, a layer of resin C formed by the crosslinking of the layers of resins A and B is present between those layers, with adjacent resin layers being bound together by crosslinking.

The thermoplastic resins that constitute the resin compositions (A) and (B) which are crosslinked to form the layers of resin A and B, respectively, are preferably such that they are miscible by melt blending. The term "miscible" as used herein means such a state that the additivity rule holds for the relationship between any one of the parameters of the resin blend (e.g. the glass transition point, mechanical properties and clarity) and the blending ratio of the individual constituents. If the thermoplastic resins that constitute the resin compositions (A) and (B) are not miscible upon melting, it becomes difficult to form the layer of resin C from the layers of resins A and B which are the constituents of the core resin in the composite vibration-damping material of the present invention.

The thermoplastic resins to be used in the present invention preferably have weight average molecular weights of at least 5000. It should, however, be noted that with the amount of the adding crosslinking agent being taken into account, the number average molecular weight of those thermoplastic resins is preferably within the range of 2000 - 50000. If the number average molecular weight is less than 2000, the resulting crosslinked resins will become brittle, leading to a lower strength of adhesion between layers. In addition, the damping performance of the final product will decrease markedly. If the number average molecular weight of the thermoplastic resins exceeds 50000, the stability of their coating solution which is to be applied to metal sheets will decrease. There also occurs the problem that the layer of resin C is difficult to form on account of high melt viscosity. A particularly preferred range of the number average molecular weight of the thermoplastic resins is from 5000 to 35000.

The thermoplastic resins to be used in the present invention may be prepared by reacting thermoplastic resins of comparatively low molecular weight with the crosslinking agent to be described herein after so that their molecular weight will increase to a proper level. It should, however, be noted that the crosslinking agent to be used in this case is limited to one that has two crosslinkable functional groups in the molecule.

It is also preferred to use such thermoplastic resins that the loss tangent (tan $\delta$) due to glass transition within the frequency range of 0.1 - 20000 Hz shows a maximum value of at least 0.5. The higher the value of tan $\delta$, more effective the resins will be in damping vibration; a particularly preferred value of tan $\delta$ is at least 0.7.

The second essential constituent of the composite vibration-damping material of the present invention is a crosslinking agent that forms a crosslinked structure by reacting with the functional groups in the thermoplastic resin described hereinabove. Therefore, the crosslinking agent may be of any type that has at least two functional groups capable of reacting with the functional groups present in said thermoplastic resin and an appropriate crosslinking agent may be selected in accordance with the specific type of the thermoplastic resin to be used.

Exemplary crosslinking agents are compounds such as isocyanates, epoxies, acid anhydrides, amines, aziridines and oxazolines. If polyester resiris having a hydroxyl group or a carboxyl group as a crosslinkable functional group are to be used, isocyanates or epoxies are preferably used; if epoxy resins having an epoxy (glycidyl) group as a crosslinkable functional group are to be used, acid anhydrides or amines are preferably used; if diene resins having a hydroxyl group, a carboxyl group or an amino group as a crosslinkable functional group are to be used, isocyanates, epoxies or acid anhydrides are preferably used; if polyamide resins having an amino group, a carboxyl group or an acid amide bond as a crosslinkable functional group are to be used, isocyanates, epoxies or acid anhydrides are preferably used; and if modified polyolefin resins having an acid anhydride group or a carboxyl group as a crosslinkable functional group are to be used, amines, isocyanates or epoxies are preferably used.

The crosslinking agent that can be used in the present invention is described below more specifically. Exemplary isocyanate based crosslinking agents include: polyisocyanate compounds having two or more isocyanate groups in the molecule, such as 2,4-tolylene diisocyanate, 2,6-tolylene diisocyanate (commonly referred to as "TDI"), methylene-bis (4-phenyl isocyanate) (commonly referred to as "MDI"), polymethylene polyphenyl polyisocyanate or MDI derivatives such as polyol-modified MDI, e.g., Coronate 1040 and Coronate 1050 (commercially available from Nippon Polyurethane Industry Co., Ltd.) or carbodimide modified MDI, e.g. Millionate MTL and Millionate MTL-C (commercially available from Nippon Polyurethane Industry Co., Ltd.), hexamethylene diisocyanate (commonly referred to as "HDI") and derivatives thereof, isophorone diisocyanate (commonly referred to as "IPDI") and derivatives thereof, TDI adduct polyisocyanates obtained by addition of TDI to trimethylolpropane, etc. such as Coronate L, HL (commercially available from Nippon Polyurethane Industry Co., Ltd.), Desmophene L and Desmodur N (commercially available from Sumitomo-Bayer Urethane Co., Ltd.), preliminarily polymerized polyisocyanates, e.g. Suprasec 3240, Suprasec 3250, Coronate 2030, Coronate 2031 (commercially available from Nippon Polyurethane Industry Co., Ltd.), Desmodur IL and Desmodur HL (commercially available from Sumitomo-Bayer Urethane Co., Ltd.), blocked isocyanates having the isocyanate masked with caprolactam, etc., and isocyanate terminated prepolymers obtained by reacting a low molecular weight polyether with above-mentioned polyfunctional isocyanates.

Particularly good results are obtained by using a polyisocyanate compound having three isocyanate groups in the molecule (as commercially available under the trade names "Coronate L" and "Coronate 2030") since the crosslinked resin obtained by forming crosslinks with the thermoplastic resin provides a three-dimensional crosslinked structure, imparting excellent bonding performance and heat-resisting performance to the finally obtained composite vibration-damping material.

Exemplary epoxy based crosslinking agents include: polyepoxy compounds having two or more epoxy groups in the molecule, bisphenol epoxy compounds such as bisphenol A type, brominated bisphenol A type and bisphenol F type, e.g. TD-127, YD-7128, YDF-165 and YDB-400EK60 (commercially available from Toto Kasei K.K.) and EPRICRON-830 (commercially available from Dainippon Ink & Chemicals, Inc.); novolak type epoxy compounds such as o-cresol novolak type epoxy compounds; polyglycidyl ethers such as sorbitol polyglycidyl ether, pentaerythritol polyglycidyl ether, glycerol polyglycidyl ether, ethylene glycol diglycidyl ether, polyethylene glycol diglycidyl ether, propylene glycol diglycidyl ether and polypropylene glycol diglycidyl ether; polyglycidylamines such as tetrafunctional amine type polyglycidylamine, e.g. YH-434 (commercially available from Toto Kasei K.K.); glycidyl esters such as diglycidyl phthalate, diglycidyl hexahydrophthalate and diglycidyl-p-oxybenzonate; and alicyclic epoxy compounds, e.g. ERL-4234 (commercially available from Union Carbide Corporation).

Exemplary acid anhydride based crosslinking agents include: aromatic acid anhydrides such as phthalic anhydride, trimellitic anhydride and pyromellitic anhydride; cycloaliphatic acid anhydrides such as maleic anhydride, succinic anhydride and tetrahydrophthalic anhydride; arid aliphatic acid anhydrides such as polyadipic anhydride, polyazelaic anhydride and polysebacic anhydride.

Exemplary amine based crosslinking agents include: chained aliphatic polyamines such as diethylenetriamine and triethylenetetramine; cycloaliphtic polyamines such as menthenediamine and isophoronediamine; aliphatic-aromatic polyamines such as m-xylenediamine; and aromatic polyamines such as metaphenylenediamine, diaminodiphenylmethane and diaminodiphenylsulfone.

Other crosslinking agents that can be used in the present invention include aziridine based crosslinking agents and oxazoline based crosslinking agents that are comprised of polyfunctional groups.

The crosslinking agents listed above may be used either on their own or as admixtures.

If necessary, various catalysts may be used for the purpose of accelerating or retarding the rate of reaction between functional groups. If such catalysts are to be used, they may be added either separately to the thermoplastic resin (or in solution) and the crosslinking agent (or in solution) or direct to a mixture of the thermoplastic resin and the crosslinking agent (or a mixture thereof in solution).

The above-stated object can also be attained by means of the unremoved catalysts (e.g. ester exchange catalyst and polymerization catalyst) that have been used in preparing the thermoplastic resin or the crosslinking agent.

The composite vibration-damping material of the present invention comprises two metal sheets between which is interposed the core resin that is the crosslinked product of resin compositions that contain the aforementioned thermoplastic resins and crosslinking agent. The core resin layer is characterized in that it is composed of the layer of resins A and B having different glass transition points and that the layer of resin C formed by the crosslinking of the layers of resins A and B is present between those two layers, with crosslinks being formed between adjacent resin layers.

The term "glass transition point" as used herein means the glass transition point of the crosslinked resin as measured after the thermoplastic resins and the crosslinking agent have formed crosslinked structure.

The glass transition point of each of resins A and B is preferably within the range of -50 to 80°C. If their glass transition point is lower than -50°C, they will exhibit a fairly high vibration-damping property in a temperature range lower than ordinary temperatures; however, the resins are soft at ordinary temperatures and do not have adequate cohesive force, so that even a multi-layered structure produced in accordance with the present invention will have undesirably low bonding performance. On the other hand, if the glass transition point of the two resin layers is higher than 80°C, they will exhibit a fairly high damping property at high temperatures. Further, the resins are glassy at ordinary temperatures, exhibiting high cohesive force and good bonding performance between resin layers. However, glassy resins are unable to conform to various deformations of the metal sheets that will take place during the molding and processing of the composite vibration-damping material and this can potentially lead to cracking and other molding defects in the damping material. Furthermore, the damping performance at near-ordinary temperatures is too low to satisfy the requirement of the present invention for developing satisfactory damping performance over a broad range of temperatures. A particularly preferred glass transition point of the resin layers is within the range of from -30°C to 70°C.

After crosslinking, the layers of resins A and B preferably have glass transition points that differ from each other by 10 - 100°C. IF the difference is less than 10°C, the temperature range over which satisfactory damping performance is exhibited becomes narrow. If the difference exceeds 100°C, the damping property is poor at temperatures offset from the peak values for the damping performance of respective resins A, B and C. A more preferred difference in glass transition point is 30 - 80°C.

The glass transition point of each resin composition which is the starting material for layer of resin can be controlled by adjusting the glass transition point of the thermoplastic resin which is a constituent of the resin composition (as set forth under $\underline{c}$ in appended claim 10) and the crosslink density to be discussed below. If desired, thermoplastic resins having different glass transition points may be used and, at the same time, the differential crosslink densities of the resins can also be applied.

In order to attain the advantageous range for the glass transition point of the aforementioned core resin by adjusting the yet to be crosslinked thermoplastic resins that constitute the layers of resins A and B, the glass transition points of those respective thermoplastic resins are preferably set to lie within the range of from -50°C to 80°C, more preferably from -30°C to 70°C. In order to attain the advantageous range for the temperature difference between the glass transition points of the two resin layers A and B, the glass transition points of the respective thermoplastic resins are adjusted to have a temperature difference of 10 - 100°C, with the particularly preferred temperature difference being 30 - 80°C.

The layer of resin C to be formed in the present invention preferably shows a glass transition point just intermediate between the glass transition points of the layers of resins A and B. If the glass transition point of resin C is close to the glass transition point of either resin A or B, a low-damping temperature region will occur at temperatures between the peak values for the damping properties shown by resins A and B.

Another feature of the composite vibration-damping material of the present invention is that the core resin interposed between the two metal sheets is composed of layers of resins A and B having different crosslink densities and that the layer of resin C optionally formed by the crosslinking of the layers of resins A and B is present between those two layers, with crosslink being formed between adjacent resin layers.

The term "crosslink density" as used herein means the number of crosslinks (per unit volume) that have been formed by the crosslinking of the thermoplastic resin and the crosslinking agent.

In the case where the resin composition is constituted of a saturated polyester (in which the crosslinkable functional group is a hydroxyl group) and an isocyanate compound that have heretofore been quoted as the advantageous examples of a resin composition including the thermoplastic resin and the crosslinking agent, the "crosslink density" refers to the number of bound chains such as urethane and allophanate bonds that are formed by the crosslinking reaction. By adopting one of the following three practices on the thermoplastic resin and/or the crosslinking agent, the individual layers of resins A and B can be rendered to have different relative crosslink densities after crosslinking:

d) using thermoplastic resins having different number average molecular weights;

e) changing the amount of the crosslinking agent to be incorporated;

f) using thermoplastic resins and/or crosslinking agents that have different numbers of crosslinkable functional groups.

Adjusting the crosslink density by method d) means either mixing a thermoplastic resin having a comparatively high number average molecular weight with an equivalent amount of crosslinking agent to obtain a resin composition of low crosslink density or mixing a thermoplastic resin having a comparatively low number average molecular weight with an equivalent amount of crosslinking agent to obtain a resin composition of high crosslink density.

In this case, as already mentioned, the thermoplastic resins that constitute the yet to be crosslinked resin compositions (A) and (B) preferably have number average molecular weights in the range of 2000 - 50000, more preferably in the range of 5000 - 35000.

Further, the number average molecular weights of the thermoplastic resins that constitute the yet to be crosslinked resin compositions (A) and (B) preferably differ from each other by at least 3000. If the difference in number average molecular weight is less than 3000, the resulting difference in crosslink density will be so small as to narrow the temperature range over which the damping property will develop. A particularly preferred difference in number average molecular weight is at least 10000. The individual thermoplastic resins may be the same or different in such aspects as the species of resin, the composition of feed, the glass transition point and the number of crosslinkable functional groups. If thermoplastic resins differ in number average molecular weight, the crosslinking agents which are the other constituent of resin composition may be the same or different in such aspects as the species of crosslinking agent, the number of crosslinkable functional groups and the amount of incorporation into the resin composition.

Adjusting the crosslink density by method e) means incorporating the crosslinking agent in different amounts in the yet to be crosslinked resin compositions (A) and (B). The greater the amount in which the crosslinking agent is incorporated, the higher the density of crosslinks with the thermoplastic resin. Conversely the smaller the amount of the crosslinking agent that is incorporated, the lower the density of crosslinks with the thermoplastic resin.

In this case, the amount in which the crosslinking agent is incorporated in the yet to be crosslinked resin compositions (A) and (B) is preferably within the range of 0 - 5.0 equivalents as calculated for the number of crosslinkable functional groups in the thermoplatic resin and the crosslinking agent. If the amount of incorporation of the crosslinking agent exceeds 5.0 equivalents, the damping property will be exhibited at higher temperatures but, on the other hand, the damping performance will deteriorate considerably. A particularly preferred range for the amount of incorporation of the crosslinking agent is from 0.5 to 3.0 equivalents.

Further, the amounts of incorporation of the crosslinking agent in the yet to be crosslinked resin compositions (A) and (B) preferably differ from each other by at least 0.5 equivalent. If the difference in the amount of incorporation is less than 0.5 equivalent, the resulting difference in crosslink density will be so small as to narrow the temperature range over which the damping property will develop. A particularly preferred difference in the amount of incorporation is at least 1.0 equivalent. In this case, the individual crosslinking agents may be the same or different in such aspects as the species of crosslinking agent and the number of crosslinkable functional groups. If there is a difference in the amount of incorporation of the crosslinking agents, the thermoplastic resins which are the other constituent of resin composition may be the same or different in such aspects as the species of resin, the composition of feed, the number average molecular weight, the glass transition point and the number of crosslinkable functional groups.

Adjusting the crosslink density by method f) means such that the yet to be crosslinked resin compositions (A) and (B) are designed to have different numbers of crosslinkable functional groups in either the constituent thermoplastic resin or the crosslinking agent or both.

If the thermoplastic resin and the crosslinking agent are incorporated in equivalent amounts, the crosslink density will become higher as either one of the thermoplastic resin and the crosslinking agent has an increasing number of crosslinkable functional groups. Conversely, the crosslink density will become lower as either one of the thermoplastic resin and the crosslinking agent has a decreasing number of crosslinkable functional groups.

In this case, the number of crosslinkable functional groups in the thermoplastic resin or the crosslinking agent is preferably within the range of 2 - 4 per molecule. If there is only one crosslinkable functional group present in the thermoplastic resin or the crosslinking agent per molecule, no crosslinked resin will form. If five or more crosslinkable functional groups are present per molecule, the resulting crosslinked resin will become so hard and brittle that not only will the bonding performance of the composited resin layers decrease but the vibration-damping performance of the composite material will also deteriorate considerably.

If a thermoplastic resin having two crosslinkable functional groups per molecule is combine with a crosslinking agent that also has two crosslinkable functional groups per molecule, the crosslinking reaction will proceed two-dimensionally, yielding a crosslinked resin that is a thermoplastic resin of higher molecular weight. In this case, the term "crosslinked" may not be the right word to express the product but for the purpose of the present discussion, the product shall be designated as a "crosslinked resin".

If there is introduced a difference in the number of crosslinkable functional groups, the respective thermoplastic resins may be the same or different in such aspects as the species of resin, the composition of feed, the glass transition point and the number average molecular weight. Further, in this case, the crosslinking agents which are the other constituent of resin composition may be the same or different in such aspects as the species of crosslinking agent and the amount of it incorporation into the resin composition.

In accordance with another aspect of the present invention, the core resin having a separation-free multi-layered structure may be rendered electrically conductive by incorporating a conductive solid material as a filler, so that the composite vibration-damping material processed from said core resin can be used as a spot-weldable material. This end, the above-described resin compositions may be rendered electrically conductive by incorporating a conductive solid material as a filler, so that a composite vibration-damping material having a core resin made from those rein compositions can be used as a spot-weldable material. Exemplary conductive materials that can be used for this purpose include: metallic materials such as stainless steel, zinc, copper, tin, nickel and brass that are worked into powders, flakes, fibers, wires and other shapes; iron-base metals plated with copper, nickel, etc.; and conductive carbonaceous materials such as carbon black, graphite and carbon fibers. These conductive materials may be used either on their own or as admixtures. For developing good conductivity, metallic materials are preferably selected as conductive materials.

A typical length (L) of various conductive materials may be determined depending upon their shape: if they are in a powder form, its maximum particle size is L; with a flake, its maximum thickness is L; and with a fiber or a wire, its maximum diameter is L. In order to develop good conductivity, the conductive material to be used is such that the ratio of (L) to the thickness (T) of a viscoelastic resin (core resin) obtained from the resin composition incorporating the conductive material is at least 0.5, preferably at least 0.8. If (L)/(T) is less than 0.5, the spot weldability of the composite vibration-damping material using said viscoelastic resin as the core resin will deteriorate.

The conductive materials are preferably loaded in such an amount as to occupy 0.5 - 10 vol% of the viscoelastic resin (core resin) to be obtained from the resin composition incorporating those conductive materials. If their loading is less than 0.5 vol%, the spot weldability of the composition vibration-damping material using said viscoelastic resin as the core resin is low. If their loading exceeds 10 vol%, the requirement for high spot weldability is satisfied but, on the other hand, not only the strength of adhesion between a metal sheet and the core resin but also the vibration-damping performance of the core resin will deteriorate. A more preferred range of the loading is from 1 to 5 vol%.

The conductive material may be preliminarily mixed with the two types of thermoplastic resin solution or crosslinking agent that constitute the layers of resins A and B, respectively. Alternatively, the conductive material may be mixed with each of the resin compositions (or in solution) that are prepared by mixing those thermoplastic resins and crosslinking agents.

If desired, the resin compositions (or in solution) may be first applied to two different metal sheets, with the conductive material being then sprayed onto one or both of the coated surfaces. In this case, the conductive material may be sprayed either prior to or after the removal of the solvent from the resin compositions.

With the adhesion of the conductive material to the metal sheets being taken into account, it is preferably sprayed prior to the removal of the solvent. The conductive material may be sprayed by means of rolls such as gravure rolls.

In the present invention, the glass transition point and tan δ of the core resin influenced not only by the essential constituents but also by other components to be incorporated in the resin compositions, which are to be described just below.

The resin compositions to be used for preparing the core resin of the present invention may contain solvents, various kinds of additives, fillers, etc. in amounts that will not be detrimental to the objects of the present invention. Exemplary solvents include toluene, xylene and methyl ethyl ketone (MEK). Exemplary additives include: tackifying resins such as polyester resins, epoxy resins, styrene resins, terpene resins, terpene phenol resins, rosin based resins, hydrocarbon based resins, aromatic resins and phenolic resins; crosslinking agents such as polyalkylene glycol polyester plasticizers, melamine resins and silane coupling agents; metal salts and chain extenders. Exemplary fillers are inorganic such as calcium carbonate, talc and hard seals.

The resin compositions to be used in preparing the core resin of the present invention are typically stored like a two-part adhesive which is composed of the active ingredient the curing agent; in other words, the thermoplastic resin and the crosslinking agent are separately stored for each resin composition and mixed together as required.

The core resin of the present invention can be prepared by heating or otherwise treating the above-described resin compositions under appropriate conditions so that the thermoplastic resin and the crosslinking agent in each of said resin compositions are reacted with each other. The conditions for heating and other treatments may be such that they suffice for permitting the thermoplastic resin to react with the crosslinking agent.

We will, in the next place, describe the process for producing composite vibration-damping materials having the core resin of the present invention. Various metal sheets can be used in producing composite vibration-damping materials having the core resin of the present invention and they may be exemplified by surface-treated steel sheets such as cold-rolled steel sheets, chromate-treated steel sheets, zinc or zinc-base metal plated steel sheets and phosphate-treated steel sheets, as well as copper sheets, aluminum sheets and stainless steel sheets. These metal sheets may be coiled or cut into lengths. The thickness of those metal sheets is not limited to any particular value but considering adaptability for shaping processes and the shape-retaining property, their thickness is preferably in the range of 0.3 - 2 mm.

The composite vibration-damping material of the present invention can be produced by the following process. Thermoplastic resins are selected in compliance with either one of the following criteria which are already described hereinabove:

c) a thermoplastic resin having a high glass transition point and a thermoplastic resin having a low glass transition point;

d) a thermoplastic resin having a high molecular weight (or number average molecular weight) and a thermoplastic resin having a low molecular weight;

e) a thermoplastic resin having a small number of crosslinkable functional groups and a thermoplastic resin having a large number of crosslinkable functional groups.

The so selected thermoplastic resins are dissolved in suitable solvents to prepare solutions, which are mixed with predetermined crosslinking agents and any other necessary constituents (for example, crosslinking agents are mixed in different proportions or those having different numbers of crosslinkable functional groups are mixed), thereby preparing two kinds of resin compositions (or in solution); thereafter, a conductive material is optionally added to those resin compositions (or in solution) and the resulting coating solutions are applied directly onto the mating surfaces of two metal sheets. Subsequently, the solvent is removed by holding at room temperature, preferably by heating to a temperature of 100 - 200°C. If necessary, a conductive material may be sprayed onto the coated surfaces of the metal sheets either prior to or after the removal of the solvent. Immediately after the removal of the solvent or after standing for a certain period, the coated surfaces of the metal sheets are brought into intimate contact with each other and they are bonded together in superposition by heating. These procedures complete the process of providing the desired composite vibration-damping material having the core resin layer interposed between the two metal sheets.

The methods for coating the resin compositions are not limited in any particular way but, preferably, roll coaters, sprays, curtain flow coaters, doctor knife coaters, etc. may be used.

The resin compositions are preferably coated in such thicknesses that the thickness of the core resin layer to be finally obtained is from 1/50 to 1/5 of the thickness of each of the metal sheets to be superposed, substantially ranging from 20 to 150 μm in absolute terms. If the thickness of the core resin layer is less than 20 μm, the vibration-damping and bonding properties of the core resin will deteriorate; if the thickness of the core resin layer exceeds 150 μm, metal sheets can potentially be dislocated or cracked during the subsequent shaping process.

The applied resin compositions (A) and (B) may be freed of the solvent by holding at room temperature or preferably by heating to an elevated temperature. However, excessive heating will cause the crosslinking reaction to proceed excessively while the solvent is removed. If the crosslinking reaction is excessive, the layers of resins A and B are difficult to bond together in the subsequent step of bonding in superposition, and no crosslinks will form between the layers of resins A and B.

The resin compositions (A) and (B) that have been freed of the solvent and that are about to be bonded together in superposition are advantageously such that they have undergone the crosslinking reaction by a degree in the range of 0 - 50%. The lower the degree of crosslinking reaction that has occurred up to the stage just before the bonding step is started, the higher the degree by which the layer of resin C will form as a result of crosslinking reaction between the layers of resins A and B during bonding in superposition. It should, however, be noted that the degrees mentioned above will vary with the temperature condition for bonding in superposition. If the degree of crosslinking reaction that has occurred up to the stage just before the bonding step is started exceeds 50%, the layer of resin C will not form between the layers of resins A and B, causing those layers to separate from each other. In this case, the resulting composite vibration-damping material is affected by the layer of resin B which has either a relatively low glass transition point or a relatively low crosslink density and, as a result, the strength of adhesion between the layers of resins A and B will decrease drastically. A particularly preferred range for the degree of crosslinking reaction that has occurred up to the stage just before the bonding step is started is from 5 to 35%.

The temperature for bonding the layers of resins A and B in superposition may be such that the respective resin compositions are given heat at 130 - 250°C; a contact time of ca. 30 sec - 3 min will suffice for bonding with a heated press and a contact time of ca. 1 - 30 sec will suffice for bonding with heated rolls. If desired, the metal sheets may be preliminarily heated to the same temperature as that for bonding and the respective resin compositions are bonded together in superposition by means of a cooling press or cooling rolls.

It should, however, be noted that the temperature for bonding in superposition must be set to such a value that the resin compositions (A) and (B) yet to be subjected to the crosslinking reaction will be miscible with each other in a molten state. The temperature for bonding in superposition and the time of bonding are preferably set in consideration of the progress (the degree) of crosslinking reaction that has occurred up to the stage just before the start of the bonding step after the solvent removal by drying in the preceding step. By adjusting the temperature for bonding in superposition and the time of bonding, the proportions of the layers A, B and C which are the constituents of the core resin can be controlled. Generally speaking, the longer the time of bonding at the temperature for bonding in superposition at which the resin compositions (A) and (B) melt, the higher the proportion occupied by the layer of resin C. It should, however, be noted that if the temperature for bonding in superposition and the time of bonding are excessive, not only will the molten blend become miscible but also the cross linking reaction will proceed too rapidly. Hence, there is an upper limit on the proportion in which the layer of resin C can be formed. Preferably, the temperature for bonding in superposition and the time of bonding are adjusted within the ranges already set forth above.

As described above, the resin compositions to be used for obtaining the core resin of the present invention may be applied as solution onto metal sheets, so the adhesion between each metal sheet and the core resin can be sufficiently enhanced to prevent the entrapping of any gas layer.

The resin compositions also have the added feature that the length of their pot life after coating on metal sheets is acceptable for practical applications.

Further, the composite vibration-damping material having the core resin of the present invention has the feature that the desired bonding property can be attained immediately after bonding in superposition and that even if it is manufactured under comparable conditions to those adopted in using common thermoplastic resins, the core resin will exhibit heat resistance at temperatures higher than the bonding temperature.

The following examples are provided for the purpose of further illustrating the present invention but are in no way to be taken as limiting.

In the following examples, resin compositions were interposed between two metal sheets and samples of composite vibration-damping material were prepared under predetermined conditions. These samples were subjected to the following tests for evaluating their performance.

(1) Vibration-damping performance

As an index of vibration-damping performance, the loss factor ($\eta$) of each sample was measured by a mechanical impedance method and the temperature dependency of loss factor at 1000 Hz was investigated.

(2) Bonding performance

(i) T-peel strength: Each sample was slit to width of 25 mm and measurements were conducted at a tensile speed of 200 mm/min and at a room temperature (23°C) in accordance with JIS K-6854.

(ii) Shear adhesion strength: Each sample was slit to an area of 25 mm x 12.5 mm and measurements were conducted at a tensile speed of 10 mm/min and at a room temperature (23°C) in accordance with JIS K-6850.

(3) Adaptability for shaping process

Each sample was slit to a size of 25 mm wide by 100 mm long and bent to 4 mmɸ; the results were evaluated by the criteria of X (lifting occurred in the bend) and o (no change occurred). Another bent test piece was either left in an oven at 150°C for 24 h or submerged in boiling water for 24 h; the results were evaluated by the criteria of X (lifting occurred in the bend) and o (no change occurred).

(4) Heat-resisting performance

Each sample was exposed to air at 200 °C for 1 h and, thereafter, its bonding performance was investigated as in (2) to determine the percent retention of the initial adhesion strength.

(5) Welding performance

Each sample was subjected to direct spot welding at a pressure of 200 kgf with a current of 8 kA applied through 8 cycles using dome-shaped electrodes of 8 R. Samples that could be welded successfully were rated "good" and those which could not were rated "poor".

The resin compositions for each sample and the thermoplastic resins as one component of each resin composition were investigated for their physical properties by the following methods.

(1) Glass transition point

The glass transition points of each resin composition and thermoplastic resin were measured with a differential scanning calorimeter (DSC) and indicated in terms of the temperatures at which the absorption of heat due to glass transition started and ended when temperature was elevated in a nitrogen atmosphere at a rate of 10°C/min. At the same time, the temperature at which the differential value on DSC was at a minimum was determined. In the following description, this temperature is meant whenever the term "glass transition point" is simply used.

(2) Number average molecular weight

The number average molecular weight of each thermoplastic resin was measured by liquid chromatography of its solution in tetrahydrofuran and the result was calculated for polystyrene.

(3) Softening point

The softening point of each thermoplastic resin was measured by the R&B softening point method in accordance with JIS K-2531.

(4) Degree of crosslinking reaction

The degree of crosslinking reaction that occurred in each resin composition was calculated both from the number of bonds formed by crosslinking reaction and from the amount of residual crosslinking agent on the basis of the results obtained with an infrared spectrophotometer.

(i) Calculation from the number of bonds formed by crosslinking reaction:

The peak intensity due to N-H in the urethane bonds formed by the reaction between the hydroxyl group in the molecule of a copolymerized saturated polyester (as used in the following examples) and the isocyanate groups in an isocyanate compound used as a crosslinking agent was measured and compared with the 100% peak intensity for a resin composition that had been subjected to a forced reaction (i.e., after mixing with the crosslinking agent, the solvent was removed and the crosslinking reaction was completed under forced conditions of heating at 180°C in air for 30 min, followed by heating at 100°C in air for 72 h).

14

(ii) Calculation from the amount of residual crosslinking agent:

Calculation was made on the basis of the intensity ratio between the isocyanate group (-NCO) and the aliphatic C-H group which did not contribute to the reaction in the molecule of a copolymerized saturated polyester. Stated more specifically, an isocyanate compound was mixed with a solution of a copolymerized saturated polyester and the mixture was vacuum-dried at ordinary temperatures for 15 min until all solvent was removed; the degree of crosslinking reaction was calculated on the assumption that (-NCO)/(C-H) of the reaction product just after drying was 0% whereas (-NCO)/(C-H) of the product that had been subjected to a forced reaction as in (i) was 100%.

(5) Crosslink density

The crosslink density of a resin composition was calculated from the number of bonds formed by crosslinking reaction on the basis of the results obtained with an infrared spectrophotometer. Stated more specifically, the intensity due to N-H in crosslinkages was measured as in (4-i) and compared with the 100% peak intensity for a reference resin composition.

Example 1

A copolymerized saturated polyester having a number average molecular weight of 20000, a glass transition point of -20°C and a softening point of 73°C was synthesized in the usual manner from terephthalic acid, sebacic acid, neopentyl glycol and ethylene glycol and this polyester was used as a resin composition (A) that was to be crosslinked to form the layer of resin A. Said polyester was verified to contain a hydroxyl group at both ends of the molecular chain. It was dissolved in a mixed solvent of toluene and MEK to form a copolymerized saturated polyester solution having a solids content of 25 wt%.

A polymerized polyisocyanate was used as a crosslinking agent for the resin composition (A). Stated more specifically, it was a polymerized polyisocyanate solution (trifunctional; solids content, 50 wt%; trade name, Coronate 2030 available from Nippon Polyurethane Industry Co., Ltd.).

The aforementioned copolymerized saturated polyester solution and polymerized polyisocyanate solution were mixed and agitated to form a solution of resin composition (A). The mixing proportions of the two components were such that the isocyanate group in the trifunctional polyisocyanate would be in an equivalent amount with respect to the hydroxyl group at each end of the polyester's molecular chain.

A copolymerized saturated polyester having a number average molecular weight of 18000, a glass transition point of 43°C and a softening point of 98°C was synthesized in the usual manner from terephthalic acid, isophthalic acid, adipic acid, neopentyl glycol and ethylene glycol and this polyester was used as a resin composition (B) that was to be crosslinked to form the layer of resin B. Said polyester was verified to contain a hydroxyl group at both ends of the molecular chain. It was dissolved in a mixed solvent of toluene and MEK to form a copolymerized saturated polyester solution having a solids content of 25 wt%.

A polymerized polyisocyanate of the same type as used with the above-described resin composition (A) was used as a crosslinking agent for the resin composition (B).

The aforementioned copolymerized saturated polyester solution and polymerized polyisocyanate solution were mixed and agitated to form a solution of resin composition (B). The mixing proportions of the two components were such that the isocyanate group in the trifunctional polyisocyanate would be in an equivalent amount with respect to the hydroxyl group at each end of the polyester's molecular chain.

It should be noted here that the copolymerized saturated polyesters in the resin compositions (A) and (B) were such that when blended in a molten state, they would display the behavior of "miscibility" at the molecular level (the term "miscibility" as used herein means the state where the glass transition point of the resin blend changes in proportion to the blending ratio of the two resin compositions).

The thus prepared solutions of resin compositions (A) and (B) were roll coated respectively on two cold-rolled and degreased steel sheets (SPCC-SD) having a thickness of 0.6 mm, whereby a pair of one-side coated steel sheets were obtained. The as-coated film thickness of the solution was 120 μm for resin composition (A) and 117 μm for resin composition (B) and, after drying for evaporation, the film thickness was 25 μm for each resin composition. The steel sheets coated with the solutions of resin compositions (A) and (B) were heated in an oven (100°C in air for 1 min) to remove the solvent. At that time, the degree of crosslinking reaction was 12% for the resin composition (A) and 10% for the resin composition (B). Immediately thereafter, the coated surfaces of the two steel sheets were brought into contact with each other and thermally bonded with a hot press (200°C x 2 min x 5 kgf/cm²) to prepare a sample of composite vibration-damping material.

The core resin in the thus prepared sample had a thickness of 44 μm. A cross section of the core resin was examined with an electron microscope and no phase separation was observed between the layers of resins A and B. When the glass transition point of the core resin was measured with a differential scanning calorimeter, a broad DSC curve was obtained and an absorption of heat due to glass transition was found to occur over the temperature range of from -21°C to 60°C (start to end of the heat absorption), with three minimal points of the differential value on DSC occurring at -16°C, 16°C and 49°C.

In a separate experiment, resin composition (A), resin composition (B) and mixture of (A) and (B) which were the same as those used in Example 1 above except that they were not coated onto steel sheets were crosslinked individually with crosslinking agents in the same amount and under the same conditions as used in Example 1. The glass transition point of the crosslinked resin composition (A) taken alone was -15°C (absorption of heat starting at -20°C and ending at -4°C; in the following indications of the range of temperatures for glass transition, the heat absorption start point is followed by the end point); the glass transition point of the crosslinked resin composition (B) taken alone was 48°C (42 - 59°C); and the glass transition point of the resin blend of the two resin compositions (A) and (B) was 16°C (6 - 30°C) (see below in Comparative Example 2). It was therefore assumed that the core resin in the sample prepared in Example 1 would consist of not only the layers of resins A and B but also the intermediate layer of resin C that was the crosslinked product of the resins A and B.

In order to verify this assumption, a thin film of resin was cut from three areas of the sample, i.e., the two interfaces between the core resin and steel sheet and the middle of the core resin. When the crosslink densities of the three specimens were measured with an infrared spectrophotometer, it was found that their peak intensities were substantially the same as the respective crosslink densities for the case where the resin composition (A), the resin composition (B) and the miscible blend of (A) and (B) were individually crosslinked under the same conditions. This result verified the fact that the core resin in the sample prepared in Example 1 was composed of the layers of resins A and B sandwiching the layer of resin C.

The sample of Example 1 was subjected to various tests for evaluating its performance and the results are shown in Table 1, from which one can see that the tested sample was superior in bonding property and endurance while, at the same time, it exhibited good vibration-damping property over a broad temperature range.

Examples 2 and 3 and Comparative Example 1

Additional samples of composite vibration-damping material were prepared as in Example 1 except that the time of oven drying the steel sheets coated with the solutions of resin compositions (A) and (B) was changed such that the degree of crosslinking reaction measured just prior to thermal bonding would be set as shown in Table 1.

The results of various tests conducted to evaluate the performance of those samples are also shown in Table 1. The higher the degree of crosslinking reaction as measured just prior to thermal bonding, the greater the chance of separation between the layers of resins A and B and the smaller the possibility of their being bonded by crosslinkage, with the result that the strength of adhesion between the two resin layers was low. It should be particularly noted here that in Comparative Example 1, the characteristics of the layers of individual resins A and B were so dominant that the reduction in bonding property and the narrowing of the effective temperature range for vibration-damping were marked.

Comparative Example 2

An additional sample of composite vibration-damping material was prepared as in Example 1 except that the solutions of resin compositions (A) and (B) were mixed in equal amounts and agitated to form blended resin solutions, which were respectively coated on two steel sheets of the same type as used in Example 1, with the coated steel sheets being then oven dried (100°C in air x 2 min) to remove the solvent.

The results of various tests conducted to evaluate the performance of the sample are shown in Table 1. The core resin in the sample was solely composed of the layer of miscible resin blend (C) and, hence, the effective temperature range for vibration damping was narrow.

Comparative Example 3

An additional sample of composite vibration-damping material was prepared as in Example 1 except that no crosslinking agent was incorporated in either resin composition (A) or (B). The results of various tests conducted to evaluate the performance of the sample are shown in Table 1. The core resin in the sample reflected the characteristics of the layers of individual resins A and B containing no crosslinking agent, so its vibration-damping property was low at intermediate temperatures. Further, the core resin was thermoplastic and hence poor in bonding property and durability.

Table 1-1

| | Run No. | | Ex. 1 | Ex. 2 | Ex. 3 | CEx. 1 | CEx. 2*2 | CEx. 3 |
|---|---|---|---|---|---|---|---|---|
| Resin compo-sition A | Crosslink-able thermo-plastic resin | Species | copolymerized saturated polyester (-OH terminated, bifunctional) | | | | | |
| | | Number average molecular weight | 20000 | | | | | |
| | | Solution's concentration, wt% | 25 | | | | | |
| | Crosslinking agent | Species | isocyanate compound (trifunctional) | | | | | none |
| | | Amount (in equivalent ratio) | 1.0 | | | | | - |
| | Glass transition point of crosslinked resin, °C*1 | | -15 [-20 to -4] | | | | 16[6 to 30] | -20 (uncross-linked) [-24 to -13] |
| | Resin thickness before thermal bonding | As-coated, μm | 120 | | | | 118 | 125 |
| | | After drying, μm | 25 | | | | | |
| | Degree of crosslinking reaction just before thermal bonding, % | Calculated from the number of bonds formed by crosslinking reaction | 12 | 27 | 42 | 59 | 30 | - |
| | | Calculated from the amount of residual crosslinking agent | 10 | 24 | 40 | 56 | 26 | - |

*1: Temperature at which the differential value on DSC due to glass transition was at a minimum, with the heat absorption start and end points being parenthesized.

*2: A mixture of resin compositions A and B was applied to two metal sheets.

EP 0 493 123 A1

Table 1-2

| | | Run No. | Ex. 1 | Ex. 2 | Ex. 3 | CEx. 1 | CEx. 2*2 | CEx. 3 |
|---|---|---|---|---|---|---|---|---|
| Resin compo-sition B | Crosslink-able thermo-plastic resin | Species | copolymerized saturated polyester (-OH terminated, bifunctional) | | | | | |
| | | Number average molecular weight | 18000 | | | | | |
| | | Solution's concentration, wt% | 25 | | | | | |
| | Crosslinking agent | Species | isocyanate compound (trifunctional) | | | | | none |
| | | Amount (in equivalent ratio) | 1.0 | | | | | — |
| | Glass transition point of crosslinked resin, °C*1 | | 48 [42 to 59] | | | | 16[6 to 30] | 43 (uncross-linked) [38 to 56] |
| | Resin thickness before thermal bonding | As-coated, μm | 117 | | | | 119 | 120 |
| | | After drying, μm | 25 | | | | | |
| | Degree of crosslinking reaction just before thermal bonding, % | Calculated from the number of bonds formed by crosslinking reaction | 10 | 25 | 40 | 54 | 32 | — |
| | | Calculated from the amount of residual crosslinking agent | 8 | 22 | 35 | 51 | 30 | — |

*1: Temperature at which the differential value on DSC due to glass transition was at a minimum, with the heat absorption start and end points being parenthesized.
*2: A mixture of resin compositions A and B was applied to two metal sheets.

EP 0 493 123 A1

Table 1-3

| | Run No. | Ex. 1 | Ex. 2 | Ex. 3 | CEx. 1 | CEx. 2*2 | CEx. 3 |
|---|---|---|---|---|---|---|---|
| Crosslinked resin composition | Glass transition point*1, °C | -16, 16, 49 [-21 to 60] | -18, 47 [-23 to 59] | -17, 47 [-21 to 59] | -14, 47 [-20 to -4] [43 to 60] | 15 [6 to 30] | -21, 44 [-25 to 56] |
| | Resin thickness, μm | 44 | 44 | 45 | 48 | 45 | 42 |
| | Phase separation | no | no | no | yes | no | no |
| Bonding property | T-peel strength, kgf/in. | 21 | 19 | 15 | 9 | 23 | 10 |
| | Shear adhesion strength, kgf/cm$^2$ | 123 | 115 | 89 | 52 | 126 | 73 |
| Adaptability for shaping process | Ordinary state | O | O | O | x | O | O |
| | After exposure to 150°C for 24 hours | O | O | O | x | O | x |
| | After submersion in boiling water for 24 hours | O | O | O | x | O | x |
| Heat resistance | T-peel strength retention, % | 96 | 97 | 98 | 80 | 97 | 24 |
| | Shear adhesion strength retention, % | 95 | 97 | 94 | 63 | 95 | 18 |
| Vibration damping property | η max, [temp. for max at 1000 Hz, °C] | 0.31 [15] (0.21 [45])*4 0.32 [75] | 0.36 [15] (0.17 [45])*4 0.37 [75] | 0.38 [15] (0.11 [45])*4 0.40 [75] | 0.42 [20] *5 0.43 [80] | 0.59 [40] | 0.39 [10] (0.07 [35])*4 0.42 [65] |
| | Temp. range, °C for η ≥0.1 at 1000 Hz | 0 to 90 | 0 to 90 | 5 to 95 | 5 to 40 60 to 95 | 15 to 65 | 0 to 30 40 to 85 |
| Spot welding performance | | poor*3 | poor*3 | poor*3 | poor*3 | poor*3 | poor*3 |

*1: Temperature at which the differential value on DSC due to glass transition was at a minimum, with the heat absorption start and end points being parenthesized.
*2: A mixture of resin compositions A and B was applied to two metal sheets.
*3: Welding was impossible in the absence of incorporated conductive material.
*4: η min occurring between the temperature for η max, with the corresponding temperatures for η min being parenthesized.
*5: η min occurring between the temperatures for η max was less than 0.05 and could not be measured.

EP 0 493 123 A1

Example 4

A copolymerized saturated polyester having a number average molecular weight of 25000, a glass transition point of -20°C and a softening point of 73°C was synthesized in the usual manner from terephthalic acid, sebacic acid, neopentyl glycol and ethylene glycol and this polyester was used as a resin composition (A) that was to be crosslinked to form the layer the layer of resin A. Said polyester was verified to contain a hydroxyl group at both ends of the molecular chain. It was dissolved in a mixed solvent of toluene and MEK to form a copolymerized saturated polyester solution having a solids content of 25 wt%.

A polymerized polyisocyanate of the same type as used in Example 1 was used as a crosslinking agent for the resin composition (A).

The aforementioned copolymerized saturated polyester solution and polymerized polyisocyanate solution were mixed and agitated to form a solution of resin composition (A). The mixing proportions of the two components were such that the isocyanate group in the polymerized polyisocyanate would be in an equivalent amount with respect to the hydroxyl group at each end of the polyester.

A copolymerized saturated polyester of the same type as used for the resin composition (A) that had a number average molecular weight of 5000 (a glass transition point -21°C) was used as a resin composition (B) that was to be crosslinked to form the layer of resin B. Said polyester was verified to contain a hydroxyl group at both ends of the molecular chain. It was dissolved in a mixed solvent of toluene and MEK to form a copolymerized saturated polyester solution having a solids content of 25 wt%.

A polymerized polyisocyanate of the same type as used with the above-described resin composition (A) was used as a crosslinking agent for the resin composition (B).

The aforementioned copolymerized saturated polyester solution and polymerized polyisocyanate solution were mixed and agitated to form a solution of resin composition (B). The mixing proportions of the two components were such that the isocyanate group in the polymerized polyisocyanate would be in an equivalent amount with respect to the hydroxyl group at each end of the polyester.

It should be noted here that the copolymerized saturated polyesters in the resin compositions (A) and (B) were such that when blended in a molten state, they would display the behavior of "miscibility" at the molecular level (no phase separation was observed under examination with an election microscope).

A nickel powder (composed of spherical particles with a maximum diameter of 60 μm) was incorporated as a conductive material in each of the solutions of resin compositions (A) and (B) in such an amount that it would assume 3 vol% of the core resin to be finally obtained [the nickel powder was added in equal amounts in the solutions of (A) and (B)].

The thus prepared solutions of resin compositions (A) and (B) were roll coated respectively on two cold-rolled and degreased steel sheets (SPCC-SD) having a thickness of 0.6 mm, whereby a pair of one-side coated steel sheets were obtained.

The steel sheets coated with the solutions of resin compositions (A) and (B) were heated in an oven (100°C in air for 1 min) to remove the solvent. Immediately thereafter, the coated surfaces of the two steel sheets were brought into contact with each other and thermally bonded with a hot press (200°C x 2 min x 5 kgf/cm$^2$) to prepare a sample of composite vibration-damping material.

The as-coated thickness of the resin solutions, their thicknesses after evaporation, the degrees of crosslinking reaction on the respective resin compositions as measured just before thermal bonding, and the thickness of the core resin in the resulting sample were investigated and the results are shown in Table 2.

A cross section of the core resin was examined with an electron microscope and no phase separation was observed between the layers of resins A and B. When the glass transition point of the core resin was measured with a differential scanning calorimeter, a board DSC curve was obtained and an absorption of heat due to glass transition was found to occur over the temperature range of from -21°C to 5°C, with a single minimal point of the differential value on DSC occurring at -14°C.

In a separate experiment, resin composition (A), resin composition (B) and a mixture of (A) and (B) which were the same as those used in Example 4 above except that they were not coated onto steel sheets were crosslinked individually with crosslinking agents in the same amount and under the same conditions as used in Example 4. The glass transition point of the crosslinked resin composition (A) taken alone was -18°C (-23°C to -7°C); the glass transition point of the crosslinked resin composition (B) taken alone was -10°C (-15°C to 5°C); and the glass transition point of the resin blend of the two resin compositions (A) and (B) was -16°C (-22°C to -3°C). It was therefore assumed that the core resin in the same prepared in Example 4 would consist of not only the layers of resins A and B but also the intermediate layer of resin C that was the crosslinked product of the resins A and B.

In order to verify this assumption, a this film of resin was cut from three areas of the sample, i.e., the two interfaces between the core resin and steel sheet and the middle of the core resin. When the crosslink densities of the three specimens were measured with an infrared spectrophotometer, it was found that their peak intensities were substantially the same as the respective crosslink densities for the case where the resin composition (A), the resin composition (B) and the miscible blend of (A) and (B) were individually crosslinked under the same conditions. This result verified the fact that the core resin in the sample prepared in Example 4 was composed of the layers of resins A and B sandwiching the layer of resin C.

The sample of Example 4 was subjected to various tests for evaluating its performance and the results are shown in Table 2, from which one can see that the tested sample was superior in bonding property and endurance while, at the same time it, exhibited good vibration-damping property over a broad temperature range. The sample also allowed for spot welding.

Example 5 and Comparative Examples 4 and 5

Additional samples of composite vibration-damping material were prepared as in Example 4 except that the molecular weights of the thermoplastic resins in the resin compositions (A) and (B) were set as shown in Table 2. In Example 5, the conductive material (nickel powder) was not added to the solutions of resin compositions (A) and (B) but it was sprayed in the same amount by means of a gravure roll just after the solutions of those resin compositions were coated on the metal sheets.

The results of various test conducted to evaluate the performance of the samples are also shown in Table 2. The greater the difference between the number average molecular weights of the thermoplastic resins in the resin compositions (A) and (B), namely, the greater the difference in crosslink density, the broader the effective temperature range for vibration damping. It should also be noted that when either one of the two thermoplastic resins A and B had a very low molecular weight, the performance of the composite vibration-damping material deteriorated in terms of bonding and damping characteristics.

Table 2-1

| Run No. | | | Ex. 4 | Ex. 5 | CEx. 4 | CEx. 5 |
|---|---|---|---|---|---|---|
| Resin composition A | Crosslinkable thermoplastic resin | Species | copolymerized saturated polyester (-OH terminated, bifunctional) | | | |
| | | Number average molecular weight | 25000 | | | |
| | | Solution's concentration, wt% | 25 | | | |
| | Crosslinking agent | Species | isocyanate compound (trifunctional) | | | |
| | | Amount (in equivalent ratio) | 1.0 | | | |
| | Glass transition point of crosslinked resin, °C*1 | | -18 [-23 to -7] | | | |
| | Resin thickness before thermal bonding | As-coated, μm | 122 | | | |
| | | After drying, μm | 25 | | | |
| | Degree of cross-linking reaction just before thermal bonding, % | Calculated from the number of bonds formed by crosslinking reaction | 15 | 17 | 14 | 12 |
| | | Calculated from the amount of residual crosslinking agent | 12 | 15 | 10 | 9 |

*1:  Temperature at which the differential value on DSC due to glass transition
     was at a minimum, with the heat absorption start and end points being parenthesized.

EP 0 493 123 A1

Table 2-2

| | | Run No. | Ex. 4 | Ex. 5 | CEx. 4 | CEx. 5 |
|---|---|---|---|---|---|---|
| Resin composition B | Crosslinkable thermoplastic resin | Species | copolymerized saturated polyester (-OH terminated, bifunctional) | | | |
| | | Number average molecular weight | 5000 | 15000 | 23000 | 1500 |
| | | Solution's concentration, wt% | 25 | | | |
| | Crosslinking agent | Species | isocyanate compound (trifunctional) | | | |
| | | Amount (in equivalent ratio) | 1.0 | | | |
| | Glass transition point of crosslinked resin, °C*1 | | -10 [-15 to 5] | -14 [-19 to -5] | -17 [-21 to -8] | -8 [-13 to 9] |
| | Resin thickness before thermal bonding | As-coated, μm | 120 | 119 | 118 | 122 |
| | | After drying, μm | 25 | | | |
| | Degree of crosslinking reaction just before thermal bonding, % | Calculated from the number of bonds formed by crosslinking reaction | 22 | 15 | 13 | 26 |
| | | Calculated from the amount of residual crosslinking agent | 20 | 13 | 12 | 22 |

*1: Temperature at which the differential value on DSC due to glass transition
was at a minimum, with the heat absorption start and end points being parenthesized.

EP 0 493 123 A1

Table 2-3

| | Run No. | Ex. 4 | Ex. 5 | CEx. 4 | CEx. 5 |
|---|---|---|---|---|---|
| Crosslinked resin composition | Glass transition point*1, °C | -14 [-21 to 5] | -16 [-21 to -5] | -17 [-22 to -7] | -18, -8 [-23 to 9] |
| | Resin thickness, μm | 47 | 45 | 47 | 43 |
| | Phase separation | no | no | no | some |
| Bonding property | T-peel strength, kgf/in. | 18 | 16 | 15 | 10 |
| | Shear adhesion strength, kgf/cm$^2$ | 89 | 82 | 80 | 52 |
| Adaptability for shaping process | Ordinary state | o | o | o | x |
| | After exposure to 150°C for 24 hours | o | o | o | x |
| | After submersion in boiling water for 24 hours | o | o | o | x |
| Heat resistance | T-peel strength retention, % | 95 | 94 | 92 | 77 |
| | Shear adhesion strength retention, % | 92 | 92 | 90 | 68 |
| Vibration damping property | η max, [temp. for max at 1000 Hz, °C] | 0.45 [25] | 0.47 [20] | 0.49 [15] | 0.28 (0.10 [30])*2 0.19 [40] |
| | Temp. range for η ≥0.1 at 1000 Hz, °C | 0 to 70 | 0 to 60 | 0 to 45 | 5 to 65 |
| Spot welding performance | | good | good | good | good |

*1:  Temperature at which the differential value on DSC due to glass transition was at a minimum, with the heat absorption start and end points being parenthesized.

*2:  η min occurring between the temperature for η max, with the corresponding temperatures for η min being parenthesized.

EP 0 493 123 A1

Example 6

A copolymerized saturated polyester having a number average molecular weight of 15000, a glass transition point of -18°C and a softening point of 77°C was synthesized in the usual manner from terephthalic acid, sebacic acid, ethylene glycol and polyethylene glycol (number av. mol. wt. 1000) and this polyester was used as a resin composition (A) that was to be crosslinked to form the layer of resin A. Said polyester was verified to contain a hydroxyl group at both ends of the molecular chain. It was dissolved in a mixed solvent of toluene and MEK to form a copolymerized saturated polyester solution having a solids content of 25 wt%.

A polymerized polyisocyanate of the same type as used in Example 1 was used as a crosslinking agent for the resin composition (A).

The aforementioned copolymerized saturated polyester solution and polymerized polyisocyanate solution were mixed and agitated to form a solution of resin composition (A). The mixing proportions of the two components were such that the isocyanate group in the polymerized polyisocyanate would be in an equivalent amount with respect to the hydroxyl group at each end of the polyester.

A copolymerized saturated polyester of the same type as used for the resin composition (A) was used as a resin composition (B) that was to be crosslinked to form the layer of resin B. Said polyester was dissolved in a mixed solvent of toluene and MEK to form a copolymerized saturated polyester solution having a solids content of 25 wt%.

A polymerized polyisocyanate of the same type as used with the above-described resin composition (A) was used as a crosslinking agent for the resin composition (B).

The aforementioned copolymerized saturated polyester solution and polymerized polyisocyanate solution were mixed and agitated to form a solution of resin composition (B). The mixing proportions of the two components were such that the isocyanate group in the polymerized polyisocyanate would be in an amount three times the equivalent of the hydroxyl group at each end of the polyester.

It should be noted here that the copolymerized saturated polyesters in the resin compositions (A) and (B) were such that when blended in a molten state, they would display the behavior of "miscibility" at the molecular level (no phase separation was observed under examination with an electron microscope).

The thus prepared solutions of resin compositions (A) and (B) were roll coated respectively on two cold-rolled and degreased steel sheets (SPCC-SD) having a thickness of 0.6 mm, whereby a pair of one-side coated steel sheets were obtained.

The nickel powder (composed of spherical particles with a maximum diameter of 90 $\mu$m) was sprayed as a conductive material with a gravure roll onto the surface of steel sheet coated with the solution of resin composition (A), in such an amount that the nickel powder would assume 3 vol% of the core resin to be finally obtained.

The steel sheets coated with the solutions of resin compositions (A) and (B) were heated in an oven (100°C in air for 1 min) to remove the solvent. Immediately thereafter, the coated surfaces of the two steel sheets were brought into contact with each other and thermally bonded with a hot press (200°C x 2 min x 5 kgf/cm$^2$) to prepare a sample of composite vibration-damping material.

The as-coated thickness of the resin solutions, their thicknesses after evaporation, the degrees of crosslinking reaction on the respective resin compositions as measured just before thermal bonding, and the thickness of the core resin in the resulting sample were investigated and the results are shown in Table 3.

A cross section of the core resin was examined with an electron microscope and no phase separation was observed between the layers of resins A and B. When the glass transition point of the core resin was measured with a differential scanning calorimeter, aboard DSC curve was obtained and an absorption of heat due to glass transition was found to occur over the temperature range of from -18°C to 7°C, with a single minimal point of the differential value on DSC occurring at -10°C.

In separate experiment, resin composition (A), resin composition (B) and a mixture of (A) and (B) which were the same as those used in Example 6 above except that they were not coated onto steel sheets were crosslinked individually with crosslinking agents in the same amount and under the same conditions as used in Example 6. The glass transition point of the crosslinked resin composition (A) taken alone was -14°C (-19°C to -3°C); the glass transition point of the crosslinked resin composition (B) taken alone was -5°C (-11°C to 8°C); and the glass transition point of the resin blend of the two resin compositions (A) and (B) was -9°C (-15°C to 3°C). It was therefore assumed that the core resin in the same prepared in Example 6 would consist of not only the layers of resins A and B but also the intermediate layer of resin C that was the crosslinked product of the resins A and B.

In order to verify this assumption, a thin film of resin was cut from three areas of the sample, i.e., the two interfaces between the core resin and steel sheet and the middle of the core resin. When the crosslink densities of the three specimens were measured with an infrared spectrophotometer, it was found that their peak intensities were substantially the same as the respective crosslink densities for the case where the resin composition

25

(A), the resin composition (B) and the miscible blend of (A) and (B) were individually crosslinked under the same conditions. This result verified the fact that the core resin in the sample prepared in Example 6 was composed of the layers of resins A and B sandwiching the layer of resin C.

The sample of Example 6 was subjected to various tests for evaluating its performance and the results are shown in Table 3, from which one can see that the tested sample was superior in bonding property and endurance while, at the same time, it exhibited good vibration-damping property over a broad temperature range. The sample also allowed for spot welding.

Example 7 and Comparative Example 6 and 7

Addition samples of composite vibration-damping material were prepared as in Example 6 except that the crosslinking agent was incorporated in the resin compositions (A) and (B) in the amounts shown in Table 3.

The results of various tests conducted to evaluate the performance of the samples are also shown in Table 3. The greater the difference between the amounts of the crosslinking agent incorporated in the resin compositions (A) and (B), namely, the greater the difference in crosslink density, the broader the effective temperature range for vibration damping. It should also be noted that when either one of the resin compositions (A) and (B) incorporated a very large amount of the crosslinking agent, the performance of the composite vibration-damping material deteriorated in terms of bonding and damping characteristics.

Table 3-1

| Run No. | | | Ex. 6 | Ex. 7 | CEx. 6 | CEx. 7 |
|---|---|---|---|---|---|---|
| Resin compo-sition A | Crosslink-able thermo-plastic resin | Species | copolymerized saturated polyester (-OH terminated, bifunctional) | | | |
| | | Number average molecular weight | 15000 | | | |
| | | Solution's concentration, wt% | 25 | | | |
| | Crosslinking agent | Species | isocyanate compound (tri-functional) | none | isocyanate compound (trifunctional) | |
| | | Amount (in equivalent ratio) | 1.0 | – | 1.0 | |
| | Glass transition point of crosslinked resin, °C*1 | | -14 [-19 to -3] | -18 (uncross-linked) [-22 to -10] | -14 [-19 to -3] | |
| | Resin thickness before thermal bonding | As-coated, μm | 120 | | | |
| | | After drying, μm | 25 | | | |
| | Degree of cross-linking reaction just before thermal bonding, % | Calculated from the number of bonds formed by crosslinking reaction | 13 | – | 12 | 12 |
| | | Calculated from the amount of residual crosslinking agent | 11 | – | 10 | 9 |

*1: Temperature at which the differential value on DSC due to glass transition was at a minimum, with the heat absorption start and end points being parenthesized.

EP 0 493 123 A1

Table 3-2

| Run No. | | | Ex. 6 | Ex. 7 | CEx. 6 | CEx. 7 |
|---|---|---|---|---|---|---|
| Resin compo- sition B | Crosslink- able thermo- plastic resin | Species | copolymerized saturated polyester (-OH terminated, bifunctional) | | | |
| | | Number average molecular weight | 15000 | | | |
| | | Solution's concentration, wt% | 25 | | | |
| | Crosslinking agent | Species | isocyanate compound (trifunctional) | | | |
| | | Amount (in equivalent ratio) | 3.0 | 2.0 | 5.5 | 1.4 |
| | Glass transition point of crosslinked resin, °C*1 | | -5 [-11 to 8] | -11 [-16 to 2] | 0 [-7 to 13] | -12 [-17 to -2] |
| | Resin thickness before thermal bonding | As-coated, μm | 115 | 118 | 112 | 120 |
| | | After drying, μm | 25 | | | |
| | Degree of cross-linking reaction just before thermal bonding, % | Calculated from the number of bonds formed by crosslinking reaction | 39 | 24 | 48 | 21 |
| | | Calculated from the amount of residual crosslinking agent | 37 | 22 | 46 | 17 |

*1: Temperature at which the differential value on DSC due to glass transition was at a minimum, with the heat absorption start and end points being parenthesized.

Table 3-3

| | Run No. | Ex. 6 | Ex. 7 | CEx. 6 | CEx. 7 |
|---|---|---|---|---|---|
| Crosslinked resin composition | Glass transition point[1], °C | -10 [-18 to 7] | -15 [-22 to 2] | -12, 0 [-18 to 12] | -13 [-18 to -2] |
| | Resin thickness, μm | 45 | 43 | 47 | 45 |
| | Phase separation | no | no | some | no |
| Bonding property | T-peel strength, kgf/in. | 19 | 14 | 11 | 18 |
| | Shear adhesion strength, $kgf/cm^2$ | 91 | 72 | 58 | 87 |
| Adaptability for shaping process | Ordinary state | O | O | X | O |
| | After exposure to 150°C for 24 hours | O | X | X | O |
| | After submersion in boiling water for 24 hours | O | O | X | O |
| Heat resistance | T-peel strength retention, % | 97 | 88 | 82 | 95 |
| | Shear adhesion strength retention, % | 95 | 86 | 80 | 93 |
| Vibration damping property | $\eta$ max, [temp. for max at 1000 Hz, °C] | 0.47 [30] | 0.58 [15] | 0.32 [20] (0.05 [40])[2] 0.08 [50] | 0.43 [20] |
| | Temp. range, °C for $\eta \geq 0.1$ at 1000 Hz | 5 to 85 | -5 to 70 | 5 to 35 | 5 to 50 |
| Spot welding performance | | good | good | good | good |

*1: Temperature at which the differential value on DSC due to glass transition was at a minimum, with the heat absorption start and end points being parenthesized.

*2: $\eta$ min occurring between the temperature for $\eta$ max, with the corresponding temperatures for $\eta$ min being parenthesized.

EP 0 493 123 A1

Example 8

A copolymerized saturated polyester having a number average molecular weight of 18000, a glass transition point of -12°C and a softening point of 82°C was synthesized in the usual manner from terephthalic acid, sebacic acid, ethylene glycol, 1,6-hexanediol and 3-methylpentadiol and this polyester was used as a resin composition (A) that was to be crosslinked to form the layer of resin A. Said polyester was verified to contain a hydroxyl group at both ends of the molecular chain. It was dissolved in a mixed solvent of toluene and MEK to form a copolymerized saturated polyester solution having a solids content of 25 wt%.

A diisocyanate compound was used as a crosslinking agent for the resin composition (A). Stated more specifically it was a carbodiimide modified MDI (bifunctional; trade name, Millionate MTL-C available from Nippon Polyurethane Industry Co., Ltd.).

The aforementioned copolymerized saturated polyester solution and diisocyanate compound were mixed and agitated to form a solution of resin composition (A). The mixing proportions of the two components were such that the isocyanate group in the diisocyanate compound would be in an equivalent amount with respect to the hydroxyl group at each end of the polyester.

A polyester of the same type as the copolymerized saturated polyester for the resin composition (A) was used as a resin composition (B) that was to be crosslinked to form the layer of resin B. Said polyester was dissolved in a mixed solvent of toluene and MEK to form a copolymerized saturated polyester solution having a solids content of 25%.

A polymerized polyisocyanate of the same type as used with the above-described resin composition (A) was used as a crosslinking agent for the resin composition (B).

The aforementioned copolymerized saturated polyester solution and polymerized polyisocyanate solution were mixed and agitated to form a solution of resin composition (B). The mixing proportions of the two components were such that the isocyanate group in the polymerized polyisocyanate would be in an equivalent amount with respect to the hydroxyl group at each end of the polyester.

It should be noted here that the copolymerized saturated polyester in the resin compositions (A) and (B) were such that when blend in a molten state, they would display the behavior of "miscibility" at the molecular level (no phase separation was observed under examination with an electron microscope).

The thus prepared solutions of resin composition (A) and (B) were roll coated respectively on two cold-rolled and degreased steel sheets (SPCC-SD) having a thickness of 0.6 mm, whereby a pair of one-side coated steel sheets were obtained.

A nickel powder (composed of spherical particles with a maximum diameter of 90 $\mu$m) was sprayed as a conductive material with a gravure roll onto the surface of steel sheet coated with the solution of resin composition (A), in such an amount that the nickel powder would assume 1 vol% of the core resin to be finally obtained.

The steel sheets coated with the solutions of resin compositions (A) and (B) were heated in an oven (100°C in air for 1 min) to remove the solvent. Immediately thereafter, the coated surfaces of the two steel sheets were brought into contact with each other and thermally bonded with a hot press (200°C x 2 min x 5kgf/cm$^2$) to prepare a sample of composite vibration-damping material.

The as-coated thicknesses of the resin solutions, their thicknesses after evaporation, the degrees of crosslinking reaction on the respective resin compositions as measured just before thermal bonding, and the thickness of the core resin in the resulting sample were investigated and the results are shown in Table 4.

A cross section of the core resin was examined with an electron microscope and no phase separation was observed between the layers of resins A and B. When the glass transition point of the core resin was measured with a differential scanning calorimeter, a broad DSC curve was obtained and an absorption of heat due to glass transition was found to occur over the temperature range of from -16°C to 7°C, with a single minimal point of the differential value on DSC occurring at -7°C.

In an experiment conducted in the same manner as in Example 6, the glass transition point of the crosslinked resin composition (A) taken alone was found to be -11°C (-16°C to -2°C); transition point of the crosslinked resin composition (B) taken alone was -5°C (-10°C to 7°C); and the glass transition point of the resin blend of the two resin compositions (A) and (B) was -8°C (-14°C to 5°C). It was therefore assumed that the core resin in the sample prepared in Example 8 would consist of not only the layers of resins A and B but also the intermediate layer of resin C that was the crosslinked product of the resins A and B.

In order to verify this assumption, a thin film of resin was cut from three areas of the sample, i.e., the two interfaces between the core resin and steel sheet and the middle of the core resin. When the crosslink densities of the three specimens were measured with an infrared spectrophotometer, it was found that their peak intensities were substantially the same as the respective crosslink densities for the resin case where the resin composition (A), the resin composition (B) and the miscible blend of (A) and (B) were individually crosslinked under the same conditions. This result verified the fact that the core resin in the sample prepared in Example 8 was composed of the layers of resins A and B sandwiching the layer of resin C.

The sample of Example 8 was subjected to various tests for evaluating its performance and the results are shown in Table 4, from which one can see that the tested sample was superior in bonding property and endurance while, at the same time, it exhibited good vibration-damping property over a broad temperature range. The sample also allowed for spot welding.

Example 9

An addition sample of composite vibration-damping material was prepared as in Example 8 except that the crosslinking agent in the compositions (B) was replaced by a tetrafunctional isocyanate compound (i.e., TDI adduct polyisocyanate having 2,4-tolylenediisocyanate added to pentaerythritol).

The results of various tests conducted to evaluate the performance of the sample are shown in Table 4, from which one can see that the vibration-damping material of the present invention is superior in bonding property and endurance while, at the same time, it exhibits vibration-damping property over a broad temperature range. Further, that sample also allows for spot welding.

Example 10

An addition sample of composite vibration-damping material was prepared as in Example 8 except for the following two points: the thermoplastic resin in the resin composition (B) was trifunctional copolymerized saturated polyester that had a number average molecular weight 22000, a glass transition point of -10°C and a softening point of 97°C and that also contained trimethylolpropane as a comonomer (said polyester was verified to contain three OH groups in the molecule); and the crosslinking agent in the resin composition (B) was the same as the diisocyanate compound used as the crosslinking agent in the resin composition (A).

It should be noted here that the thermoplastic resins in the resin compositions (A) and (B) were such that when blended in a molten state, they would display the behavior of "miscibility" at the molecular level (no phase separation was observed under examination with an electron microscope).

The results of various tests conducted to evaluate the performance of the sample are shown in Table 4, from which one can see that the vibration-damping material of the present invention is superior in bonding property and endurance while, at the same time, it exhibits vibration-damping property over a broad temperature range. Further, that sample also allows for spot welding.

Example 11

A thermoplastic resin that was the same as used in the resin composition (A) in Example 4 was employed and treated as in Example 4 to prepare a solution of copolymerized saturated polyester.

A crosslinking agent that was the same as the polymerized polyisocyanate serving as the crosslinking agent in the resin composition (A) in Example 4 was employed.

The aforementioned copolymerized saturated polyester solution and polymerized polyisocyanate solution were mixed and agitated to form a solution of resin composition (A). The mixing proportions of the two components were such that the isocyanate group in the polymerized polyisocyanate would be in an amount 1.5 times the equivalent of the OH group at each end of the polyester.

A copolymerized saturated polyester having a number average molecular weight of 7000, a glass transition point of 35°C and a softening point of 127°C was synthesized in the usual manner from terephthalic acid, isophthalic acid, ethylene glycol, neopentyl glycol and polypropylene glycol (number av. mol. wt. 1000) and this polyester was used as a resin composition (B). Said polyester was verified to contain a hydroxyl group at both ends of the molecular chain. As in Example 8, a solution of the copolymerized saturated polyester solution was subsequently formed.

A diisocyanate compound of the same type as used for crosslinking agent in the resin composition (A) in Example 8 was used as the crosslinking agent in the resin composition (B).

The aforementioned copolymerized saturated polyester solution and diisocyanate compound were mixed and agitated to form a solution of resin composition (B). The mixing proportions of the two components were such that the isocyanate group in the polymerized polyisocyanate would be in an equivalent amount with respect to the hydroxyl group at both ends of the polyester.

It should be noted here that the copolymerized saturated polyesters in the resin compositions (A) and (B) were such that when blended in a molten state, they would display the behavior of "miscibility" at the molecular level (no phase separation was observed under examination with an electron microscope).

The solution of two resin compositions (A) and (B) were subsequently processed as in Example 8 to prepare a sample of composite vibration-damping material.

The as-coated thicknesses of the resin solutions, their thicknesses after evaporation, the degrees of crosslinking reaction on the respective resin compositions as measured just before thermal bonding, and the thickness of the core resin in the resulting sample were investigated and the results are shown in Table 4.

By insuring that the resin compositions (A) and (B) would have different relative values in terms of both glass transition point and crosslink density, the temperature range over which satisfactory vibration damping property was displayed could be broadened freely. The sample prepared in Example 11 also satisfied various other aspects of performance including bonding, adaptability for shaping processes and durability. The sample also allowed for spot welding.

EP 0 493 123 A1

Table 4-1

| Run No. | | | Ex. 8 | Ex. 9 | Ex. 10 | Ex. 11 |
|---|---|---|---|---|---|---|
| Resin composition A | Crosslinkable thermoplastic resin | Species | copolymerized saturated polyester (-OH terminated, bifunctional) | | | |
| | | Number average molecular weight | 18000 | 18000 | 18000 | 25000 |
| | | Solution's concentration, wt% | 25 | | | |
| | Crosslinking agent | Species | isocyanate compound (bifunctional) | | | isocyanate compound (trifunctional) |
| | | Amount (in equivalent ratio) | 1.0 | | | 1.5 |
| | Glass transition point of crosslinked resin, °C*1 | | -11 [-16 to -2] | | | -16 [-21 to -5] |
| | Resin thickness before thermal bonding | As-coated, μm | 119 | | | 121 |
| | | After drying, μm | 25 | | | |
| | Degree of crosslinking reaction just before thermal bonding, % | Calculated from the number of bonds formed by crosslinking reaction | 22 | | | 24 |
| | | Calculated from the amount of residual crosslinking agent | 20 | | | 21 |

*1: Temperature at which the differential value on DSC due to glass transition was at a minimum, with the heat absorption start and end points being parenthesized.

Table 4-2

| | | Run No. | Ex. 8 | Ex. 9 | Ex. 10 | Ex. 11 |
|---|---|---|---|---|---|---|
| Resin compo-sition B | Crosslinkable thermoplastic resin | Species | copolymerized saturated polyester | | | |
| | | Nomber of functional groups (-OH) | 2 | 2 | 3 | 2 |
| | | Number average molecular weight | 18000 | 18000 | 22000 | 7000 |
| | | Solution's concentration, wt% | 25 | 25 | 25 | 25 |
| | Crosslinking agent | Species | isocyanate compound | | | |
| | | Number of functional groups (-NCO) | 3 | 4 | 2 | 2 |
| | | Amount (in equivalent ratio) | 1.0 | | | |
| | Glass transition point of crosslinked resin, °C*1 | | −5 | −1 | −4 | 36 |
| | | | [−10 to 7] | [−7 to 10] | [−9 to 8] | [31 to 48] |
| | Resin thickness before thermal bonding | As-coated, μm | 117 | 115 | 120 | 115 |
| | | After drying, μm | 25 | | | |
| | Degree of cross-linking reaction just before thermal bonding, % | Calculated from the number of bonds formed by crosslinking reaction | 24 | 35 | 33 | 20 |
| | | Calculated from the amount of residual crosslinking agent | 21 | 32 | 29 | 17 |

*1:  Temperature at which the differential value on DSC due to glass transition
     was at a minimum, with the heat absorption start and end points being parenthesized.

EP 0 493 123 A1

34

Table 4-3

| | Run No. | Ex. 8 | Ex. 9 | Ex. 10 | Ex. 11 |
|---|---|---|---|---|---|
| Crosslinked resin composition | Glass transition point*1, °C | -7 [-16 to 7] | -5 [-14 to 10] | -7 [-15 to 8] | -11, 35 [-16 to 47] |
| | Resin thickness, μm | 44 | 45 | 44 | 45 |
| | Phase separation | no | no | no | no |
| Bonding property | T-peel strength, kgf/in. | 17 | 20 | 18 | 26 |
| | Shear adhesion strength, kgf/cm² | 85 | 90 | 87 | 112 |
| Adaptability for shaping process | Ordinary state | O | O | O | O |
| | After exposure to 150°C for 24 hours | O | O | O | O |
| | After submersion in boiling water for 24 hours | O | O | O | O |
| Heat resistance | T-peel strength retention, % | 88 | 90 | 92 | 92 |
| | Shear adhesion strength retention, % | 86 | 88 | 89 | 90 |
| Vibration damping property | η max, [temp. for max at 1000 Hz, °C] | 0.52 [25] | 0.44 [30] | 0.50 [25] | 0.48 [15] [0.43[40]*2 0.50 [65] |
| | Temp. range, °C for η ≥0.1 at 1000 Hz | 15 to 70 | 20 to 80 | 15 to 75 | 5 to 105 |
| Spot welding performance | | good | good | good | good |

*1: Temperature at which the differential value on DSC due to glass transition was at a minimum, with the heat absorption start and end points being parenthesized.

*2: η min occurring between the temperature for η max, with the corresponding temperatures for η min being parenthesized.

EP 0 493 123 A1

As described in detail on the foregoing pages, the use of the core resin of the present invention enables the manufacture of composite vibration-damping materials that display satisfactory vibration damping over a broad range of temperatures and which also excel in performance with respect to bonding, adaptability for shaping processes and endurance.

## Claims

1. In a composite vibration-damping material having a resin layer interposed between two metal sheets, the improvement wherein said resin layer having a thermoplastic resin that has two or more crosslinkable functional groups in the molecule and that is crosslinked with a crosslinking agent that forms crosslinks with said crosslinkable functional groups, said resin layer comprising either the following a) or b) or both:
   a) a layer of resin A and a layer of resin B that have different glass transition points;
   b) a layer of resin A and a layer of resin B that have different crosslink densities; the layers of A and B being bound together by means of crosslinking.

2. A composite vibration-damping material according to claim 1 wherein said layers of resins A and B are bound together via a layer of resin C that is formed by the crosslinking of the layers of resins A and B, and said layer of resin C having no discontinuous profile of glass transition point or crosslink density in the direction of its thickness.

3. A composite vibration-damping material according to claim 1 or 2 wherein said thermoplastic resin is a saturated polyester.

4. A composite vibration-damping material according to claim 1 or 2 wherein said crosslinking agent is a polyisocyanate compound.

5. A composite vibration-damping material according to claim 4 wherein said polyisocyanate compound has three isocyanate groups in the molecule.

6. A spot-weldable composite vibration-damping material according to claim 1 or claim 2 wherein the resin interposed between said two metal sheets further contains an electrically conductive material.

7. A process for producing a composite vibration-damping material as recited in claim 1 or claim 2, which comprises: preparing a solution of a yet to be crosslinked resin composition (A) that will form a layer of resin A upon crosslinking, as well as a solution of a yet to be crosslinked resin composition (B) that will form a layer of resin B upon crosslinking; applying said solutions onto different metal sheets; removing the solvent; and bonding the coated surfaces of the two metal sheets together by heating while the degree of crosslinking reaction of each resin composition is within the range of 0 - 50% (with the degree of saturated crosslinking reaction being taken as 100%).

8. A process for producing a spot-weldable composite vibration-damping material as recited in claim 6, which comprises: preparing a solution of a yet to be crosslinked resin composition (A) that will form a layer of resin A upon crosslinking, as well as a solution of a yet to be crosslinked resin composition (B) that will form a layer of resin B upon crosslinking; mixing an electrically conductive material with either the solution of resin composition (A) or the solution of resin composition (B) or both; applying said solutions onto different metal sheets; removing the solvent; and bonding the coated surfaces of the two metal sheets together by heating while the degree of crosslinking reaction of each resin composition is within the range of 0 - 50% (with the degree of saturated crosslinking reaction being taken as 100%).

9. A process for producing a spot-weldable composite vibration-damping material as recited in claim 6, which comprises: preparing a solution of a yet to be crosslinked resin composition (A) that will form a layer of resin A upon crosslinking, as well as a solution of a yet to be crosslinked resin composition (B) that will form a layer of resin B upon crosslinking; applying said solutions onto different metal sheets; spraying an electrically conductive material onto either one or the other of the coated surfaces or both prior to or after the removal of the solvent; and bonding the coated surfaces of the two metal sheets together by heating while the degree of crosslinking reaction of each resin composition is within the range of 0 - 50% (with the degree of saturated crosslinking reaction being taken as 100%).

10. A process for producing a composite vibration-damping material as recited in claim 7, wherein said resin compositions (A) and (B) satisfy at least one of the following conditions:

c) using thermoplastic resins having different glass transition points;

d) using thermoplastic resins having different number average molecular weights;

e) using resin compositions incorporating a crosslinking agent in different amounts;

f) using thermoplastic resins and/or crosslinking agents that have different numbers of crosslinkable functional groups.

FIG. 1

FIG. 2

FIG. 3

**European Patent Office**

# EUROPEAN SEARCH REPORT

Application Number

| | DOCUMENTS CONSIDERED TO BE RELEVANT | | EP 91312041.6 |
|---|---|---|---|
| **Category** | **Citation of document with indication, where appropriate, of relevant passages** | **Relevant to claim** | **CLASSIFICATION OF THE APPLICATION (Int. Cl.5)** |
| A<br><br><br>D | US - A - 4 740 427<br>(OCHIUMI)<br>  * Abstract; column 9,<br>    lines 31-51 *<br>  & JP-A-61 028 551<br>    -- | 1,7 | B 32 B 15/08<br>B 32 B 15/18 |
| A<br><br><br><br>D | EP - A - 0 177 952<br>(SUMITOMO)<br>  * Page 10, lines 19-26;<br>    page 15, lines 1-17 *<br>  & JP-A-61 089 841<br>    -- | 1,3,7 | |
| A<br><br><br>D | EP - A - 0 138 557<br>(SUMITOMO)<br>  * Abstract; page 10, lines<br>    19-26 *<br>  & JP-A-60 082 349<br>    -- | 1,7 | |
| A | EP - A - 0 089 435<br>(KAWASAKI)<br>  * Abstract; example *<br>    -- | 1,6,8,<br>9 | **TECHNICAL FIELDS SEARCHED (Int. Cl.5)** |
| A | EP - A - 0 219 104<br>(NIPPON)<br>  * Abstract *<br>    -- | 1,6,8,<br>9 | B 32 B 15/00 |
| A | EP - A - 0 385 684<br>(KABUSHIKI)<br>  * Abstract; page 5, lines<br>    47-56 *<br>    ---- | 1,6,8,<br>9 | |

The present search report has been drawn up for all claims

| Place of search | Date of completion of the search | Examiner |
|---|---|---|
| VIENNA | 31-03-1992 | ONDER |

EPO FORM 1503 03.82 (P0401)